# EUROPÄISCHE PATENTSCHRIFT

(11) **EP 2 227 677 B1**
(45) Veröffentlichungstag und Bekanntmachung des Hinweises auf die Patenterteilung: **12.07.2017**
(21) Anmeldenummer: 08866984.1
(22) Anmeldetag: 22.12.2008
(51) Int. Cl.: G01F 15/18

(54) **MEßSYSTEM FÜR EIN IN EINER PROZESSLEITUNG STRÖMENDES MEDIUM**
MEASURING SYSTEM FOR A MEDIUM FLOWING IN A PROCESS LINE
SYSTÈME DE MESURE POUR UN FLUIDE S'ÉCOULANT DANS UNE CONDUITE DE PROCESSUS

(30) Priorität: 30.12.2007 DE 102007063372
(43) Veröffentlichungstag der Anmeldung: 15.09.2010
(73) Patentinhaber: Endress+Hauser Flowtec AG, 4153 Reinach (CH)
(72) Erfinder: HÖCKER, Rainer, 79761 Waldshut (DE)
(74) Vertreter: Andres, Angelika Maria
(86) Internationale Anmeldenummer: PCT/EP2008/068165
(87) Internationale Veröffentlichungsnummer: WO 2009/083533

(56) Entgegenhaltungen:
- EP-A1- 0 908 704
- US-A- 5 013 883
- US-A1- 2005 262 937

## Beschreibung

Die Erfindung betrifft ein Meßsystem zum Messen wenigstens einer Meßgröße, insb. eines Massedurchflusses, einer Dichte, einer Viskosität, eines Drucks oder dergleichen, eines in einer Prozeßleitung strömenden Mediums mit einem Meßaufnehmer sowie einem zwischen diesem und der Prozeßleitung vermittelnden Strömungskonditionierer.

In der industriellen Prozeß-Meßtechnik werden, insb. auch im Zusammenhang mit der Automatisierung chemischer oder verfahrenstechnischer Prozesse, zur Erfassung von prozeßbeschreibenden Meßgrößen und zur Erzeugung von diese repräsentierenden Meßwertsignalen prozeßnah installierte Meßsysteme verwendet, die jeweils direkt an oder in einer von Medium durchströmten Prozeßleitung angebracht sind. Bei den jeweils zu erfassenden Meßgrößen kann es sich beispielsweise um einen Massendurchfluß, einen Volumendurchfluß, eine Strömungsgeschwindigkeit, eine Dichte, eine Viskosität oder eine Temperatur oder dergleichen, eines flüssigen, pulver-, dampf- oder gasförmigen Prozeß-Mediums handeln, das in einer solchen, beispielsweise als Rohrleitung ausgebildeten, Prozeßleitung geführt bzw. vorgehalten wird.

Bei den Meßsystemen handelt es sich u.a. um solche, bei denen In-Line-Meßgeräte mit magnetisch-induktiven Meßaufnehmern oder die Laufzeit von in Strömungsrichtung ausgesendeten Ultraschallwellen auswertende, insb. auch nach dem Doppler-Prinzip arbeitende, Meßaufnehmern, mit Meßaufnehmern vom Vibrationstyp, insb. Coriolis-Massedurchflußaufnehmer, Dichteaufnehmer, oder dergleichen verwendet werden. Der prinzipielle Aufbau und die Funktionsweise von magnetisch-induktiven Meßaufnehmer ist z.B. in der EP-A 1 039 269, US-A 60 31 740, US-A 55 40 103, US-A 53 51 554, US-A 45 63 904 oder solcher Ultraschall-Meßaufnehmer z.B. in der US-B 63 97 683, der US-B 63 30 831, der US-B 62 93 156, der US-B 61 89 389, der US-A 55 31 124, der US-A 54 63 905, der US-A 51 31 279, der US-A 47 87 252 hinlänglich beschrieben und überdies dem Fachmann ebenfalls hinreichend bekannt sind, kann an dieser Stelle auf eine detailliertere Erläuterung dieser Meßprinzipien verzichtet werden. Weiterführende Beispiele für derartige, dem Fachmann an und für sich bekannte, insb. mittels kompakter In-line-Meßgeräte gebildet, Meßsysteme sind zudem u.a. in der EP-A 984 248, GB-A 21 42 725, US-A 43 08 754, US-A 44 20 983, US-A 44 68 971, US-A 45 24 610, US-A 47 16 770, US-A 47 68 384, US-A 50 52 229, US-A 50 52 230, US-A 51 31 279, US-A 52 31 884, US-A 53 59 881, US-A 54 58 005, US-A 54 69 748, US-A 56 87 100, US-A 57 96 011, US-A 58 08 209, US-A 60 03 384, US-A 60 53 054, US-A 60 06 609, US-B 63 52 000, US-B 63 97 683, US-B 65 13 393, US-B 66 44 132, US-B 66 51 513, US-B 68 80 410, US-B 69 10 387, US-A 2007/0163361, US-A 2005/0092101, WO-A 88/02 476, WO-A 88/02 853, WO-A 95/16 897, WO-A 00/36 379, WO-A 00/14 485, WO-A 01/02816 oder WO-A 02/086 426 detailiert beschrieben.

Zum Erfassen der jeweiligen Meßgrößen weisen Meßsysteme der in Rede stehenden Art jeweils einen entsprechenden Meßaufnehmer auf, der in den Verlauf einer Medium führenden Prozeßleitung eingesetzt ist und der dazu dient, wenigstens ein die primär erfaßte Meßgröße möglichst genau repräsentierendes, insb. elektrisches, Meßsignal zu erzeugen. Dafür ist der Meßaufnehmer üblicherweise mit einem in den Verlauf der jeweiligen Prozeßleitung, dem Führen von strömendem Medium dienenden Meßrohr sowie eine entsprechende physikalisch-elektrische Sensoranordnung ausgestattet. Diese wiederum weist wenigstens ein primär auf die zu erfassende Meßgröße oder auch Änderungen derselben reagierenden Sensorelement auf, mittels dem im Betrieb wenigstens ein von der Meßgröße entsprechend beeinflußtes Meßsignal erzeugt wird. Zur Weiterverarbeitung oder Auswertung des wenigstens einen Meßsignals ist der Meßaufnehmer ferner mit einer dafür entsprechend geeigneten Meßelektronik verbunden. Die mit dem Meßaufnehmer in geeigneter Weise kommunizierende Meßelektronik erzeugt im betrieb des Meßsystems unter Verwendung des wenigstens einen Meßsignals zumindest zeitweise wenigstens einen die Meßgröße momentan repräsentierenden Meßwert, beispielsweise also einen Massendurchfluß-Meßwert, Volumendurchfluß-Meßwert, einen Dichte-Meßwert, einen Viskositäts-Meßwert, einen Druck-Meßwert, einen Temperatur-Meßwert oder dergleichen.

Zur Aufnahme der Meßelektronik umfassen solche Meßsysteme ferner ein entsprechendes Elektronik-Gehäuse, das, wie z.B. in der US-A 63 97 683 oder der WO-A 00/36 379 vorgeschlagen, vom Meßaufnehmer entfernt angeordnet und mit diesem nur über eine flexible Leitung verbunden sein kann: Alewtrantiv dazu kann das Elektronik-Gehäuse aber auch, wie z.B. auch in der EP-A 903 651 oder der EP-A 1 008 836 gezeigt, unter Bildung eines kompakten In-Line-Meßgeräts - beispielsweise eines Coriolis-Massedurchfluß-/Dichte-Meßgeräts, eines Ultraschall-Durchflußmeßgeräts, eines Vortex-Durchflußmeßgeräts, eines thermischen Durchflußmeßgeräts, eines Magnetisch-induktiven Durchflußmeßgerät oder dergleichen - direkt am Meßaufnehmer oder einem den Meßaufnehmer separat einhausenden Meßaufnehmer-Gehäuse angeordnet sein. In letzterem Fall dient das Elektronik-Gehäuse, wie beispielsweise in der EP-A 984 248, der US-A 47 16 770 oder der US-A 63 52 000 gezeigt, oftmals auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Meßsysteme der beschriebenen Art sind darüber hinaus üblicherweise über ein an die Meßelektronik angeschlossenes Datenübertragungs-System miteinander und/oder mit entsprechenden Prozeß-Leitrechnern verbunden, wohin sie die Meßwertsignale z.B. via (4 mA bis 20 mA)-Stromschleife und/oder via digitalen Daten-Bus senden. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßwertsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden.

Wie u.a. auch in der GB-A 21 42 725, US-A 58 08 209, US-A 2007/0163361, US-A 2005/0092101, US-B 68 80 410, US-B 66 44 132, US-A 60 53 054, US-B 66 44 132, US-A 50 52 229, US2005/0262937 oder der US-B 65 13 393 diskutiert, können In-Line-Meßgeräte und insoweit auch Meßsystem der beschriebenen Art durchaus eine von der Art der Strömung mehr oder minder abhängige Meßgenauigkeit aufweisen. Von besonderem Interesse ist in diesem Zusammenhang auch eine momentane Ausprägung eines im Meßrohr wirksamen Strömungsprofils. In Anbetracht dessen, daß turbulente Strömungen, also Strömungen mit einer Reynoldszahl von größer 2300, über einen weiten Reynoldszahlbereich hinweg zueinander weitgehend ähnlich sind und insoweit auch einen vergleichbaren Einfluß auf die Meßgenauigkeit haben, wird bei vielen Meßsystemen oftmals eine hohe Strömungsgeschwindigkeit für das zu messende Medium angestrebt. Vortex-Durchflußmeßgeräte sind zur Erzielung einer ausreichend hohen Meßgenauigkeit zumeist sogar auf solche Strömungen angewiesen, die eine Reynoldszahl von weit über 4000 aufweisen.

Daher ist es bei Meßsystemen der in Rede stehenden Art durchaus üblich, zumindest bei Prozeßleitungen mit einem vergleichsweise großen Kaliber und/oder in Anwendungen mit vergleichsweise langsam strömenden Medien, das Meßrohr gegebenenfalls so auszubilden, daß es einen kleineren Strömungsquerschnitt aufweist, als ein einlaßseitig an das Meßsystem angeschlossenes Zulaufsegment der Prozeßleitung. Infolge dessen erfährt das strömende Medium dann eine Beschleunigung in Strömungsrichtung, wodurch wiederum auch eine Erhöhung der Reynoldszahl erzielt werden kann. Die Realisierung dieses Prinzips hat sich im besonderen auch bei solchen Meßsystemen bewährt, die mittels eines Ultraschall-Meßgeräts und/oder mittels eines Vortex-Durchflußmeßgeräts arbeiten und/oder die für die Messung von zumindest anteilig, insb. überwiegend oder vollständig, gasförmigen Medien vorgesehen sind.

Im Hinblick auch darauf, daß beispielsweise der das Meßprinzip von Vortex-Durchflußmeßgeräten begründende Zusammenhang zwischen einer Ablöserate von Wirbeln an einem der Strömung entgegenstehenden Staukörper und der damit primär zu erfassenden Meßgröße Volumendurchfluß oder Strömungsgeschwindigkeit erst oberhalb einer Reynoldszahl von 20000 in ausreichendem Maße als linear angesehen werden kann, ist gegebenenfalls ein vergleichsweise großer Unterschied zwischen den Strömungsquerschnitten von der Prozeßleitung und Meßrohr zu realisieren.

Um über eine möglichst kurze Wegstrecke einen möglichst definierten Übergangsbereich vom Zulaufsegment hin zum Meßrohr mit kleinerem Strömungsquerschnitt zu schaffen ist es, wie u.a. auch in der GB-A 21 42 725, der US-A 58 08 209, der US-A2007/0163361, oder der US-A 2005/0092101 vorgeschlagen, üblich im Meßsystem einen entsprechenden Strömungskonditionierer mit einem sich zum Meßrohr hin verjüngenden, im Betrieb vom Medium durchströmten Lumen vorzusehen, der einlaßseitig des Meßrohrs angeordnet ist und somit zwischen diesem und dem Zulaufsegment der Prozeßleitung vermittelnd wirkt. Ein dem Zulaufsegment der Prozeßleitung zugewandtes Einlaßende des Strömungskonditionierers weist dabei einen Strömungsquerschnitt auf, der größer als der Strömungsquerschnitt des Meßrohrs ist, während ein dem Meßrohr zugewandtes Auslaßende des Strömungskonditionierers dementsprechend einen Strömungsquerschnitt aufweist, der kleiner als der Strömungsquerschnitt des Einlaßendes ist.

Besonders in der US-A 58 08 209 wie auch in der US-A 2005/0092101 wird im Zusammenhang mit den jeweils vorgeschlagenen Strömungskonditionierern ferner darauf hingewiesen, daß der damit realisierte Übergang zwischen den beiden verschieden großen Strömungsquerschnitten stetig und von Störstellen, wie beispielsweise Wirbel verursachende Kanten, absolut frei gehalten sein muß. Dies kann durch vergleichsweise aufwendige Bearbeitung der Oberflächen des Strömungskonditioners wie auch der allfällig im Einlaufbereich des Meßsystems vorhanden Fügestellen durchaus in zufrieden stellendem Maße gewährleistet werden. Allerdings hat es sich gezeigt, daß trotz der Verwendung von Strömungskonditionierern der vorgenannten Art bereits geringfügige Störungen der Strömung im Einlaufbereich des Meßsystems, insb. auch in dem dem eigentlichen Meßsystem vorgelagerten Zulaufsegment der angeschlossenen Prozeßleitung oder im Bereich des gegebenenfalls zur Verbindung von Zulaufsegment und Meßsystem dienenden einlaßseitigen Anschlußflansches, eine erhebliche Variation der Strömungsverhältnisse innerhalb des Meßrohrlumens und damit einhergehend eine entsprechende Verschlechterung der Meßgenauigkeit zu verzeichnen sind. Eine Möglichkeit zur Behebung dieses Problems besteht vordergründig darin, eine entsprechende Bearbeitung auch des Einlaufbereichs des Meßsystems, also des Zulaufsegment der Prozeßleitung oder der einlaßseitigen Flanschverbindung vorzunehmen. Praktisch ist dies jedoch eher kaum durchführbar, jedenfalls aber dem Anwender des Meßsystems nicht ohne weiters zuzumuten. Dies im besonderen auch deshalb, weil die Wahl für das Meßsystem durchaus auch dadurch bedingt sein kann, daß in einer bestehenden Anlange ein zuvor installiertes, hinsichtlich der tatsächlichen Strömungsverhältnisse jedoch möglicherweise überdimensioniertes Meßsystem *ad hoc* ausgetauscht werden soll. Insoweit ist also die tatsächliche Einbausituation für das Meßsystem nicht nur als nicht vorhersehbar, sondern auch als praktisch nicht adaptierbar und insoweit auch als nicht kontrollierbar anzusehen.

Eine weitere Möglichkeit zur Behebung der mit Strömungskonditionierern der in Rede stehenden Art einhergehenden Nachteile wird gemäß der US-A 2007/0163361 darin gesehen, einen solchen Strömungskonditionierer mittels verschiedener Innenkonusse zu bilden, so daß er innen praktisch eine gestufte Kontur aufinreist. Diese Einlaufgeometrie führt dazu, daß die Strömung im wandnahen Bereich erheblich mehr beschleunigt wird als im Inneren, wodurch das sich infolgedessen im Meßrohr schließlich einstellende Strömungsprofil eine geringe Druckabhängigkeit aufweist. Als problematisch mag bei dieser Konfiguration des Strömungsprofils jedoch dessen Abhängigkeit von der Strömungsgeschwindigkeit selbst sowie dessen im obigen Sinne gegebenenfalls zu geringer Turbulenzgrad genannt sein.

Eine andere Möglichkeit zu Umgehung der mit Strömungskonditionierern der in Rede stehenden Art verbundenen Probleme besteht ferner darin, die Einbaulänge des Strömunsgkonditionierers zu vergrößern, um so bereits im Strömungskonditionierer - möglichst aber bereits vor dem Eintritt der Strömung in das Meßrohr - in vorhersehbarer Weise eine weitgehende Vergleichmäßigung infolge erhöhter Turbulenz und/oder eine weitgehende Stabilisierung der Strömung zu erreichen. Allerdings kann dies zu einer beträchtlichen Erhöhung der Einbaulänge des gesamten Meßsystems führen. Im Hinblick auf die oben erwähnte Situation, bei der ein bestehendes herkömmliches Meßsystem durch ein solches mit vorgeschaltetem Strömungskonditionierer ersetzt werden soll, ist die Einbaulänge für das Meßsystem mehr oder minder fest vorgegeben und somit auch einer Erhöhung der Einbaulänge des Strömungskonditionierers nur in diesem eher begrenzten Maße möglich.

Ausgehend von vorbeschriebenen Nachteilen konentioneller Meßsystem der in Rede stehenden Art besteht eine Aufgabe der Erfindung daher darin, ein Meßsystem für ein strömendes Medium zu schaffen, das bei möglichst kurze Einbaulänge ein Erhöhung der Reynoldszahl der Strömung von der Prozeßleitung hin zum Meßrohr ermöglicht und das trotzdem eine gegenüber allfälligen Störungen im strömenden Medium stromaufwärts des Meßsystems, sei es im Zulaufsegment und/oder im unmittelbaren Übergangsbereich zwischen Prozeßleitung und eigentlichem Meßsystem, weitgehend unempfindliche Meßgenauigkeit aufweist.

Zur Lösung der Aufgabe besteht die Erfindung in einem in den Verlauf einer Prozeßleitung, insb. einer Rohrleitung, eingesetztes Meßsystem zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in der Prozeßleitung strömenden Mediums, welches Meßsystem umfaßt:
- einen Meßaufnehmer
   -- mit einem dem Führen von zu messendem Medium dienenden, insb. im wesentlichen gerades, Meßrohr, das einen kleineren Strömungsquerschnitt aufweist, als ein einlaßseitig an das Meßsystem angeschlossenes Zulaufsegment der Prozeßleitung, und
   -- mit einer Sensoranordnung,
      --- die wenigstens ein primär auf die zu erfassende Meßgröße, insb. auch Änderungen derselben, reagierendes Sensorelement aufweist, und
      --- die mittels des wenigstens einen Sensorelements wenigstens ein von der Meßgröße beeinflußtes Meßsignal liefert,
- eine mit dem Meßaufnehmer kommunizierende Meßelektronik, die unter Verwendung des wenigstens einen Meßsignals zumindest zeitweise wenigstens einen die Meßgröße momentan repräsentierenden Meßwert, insb. einen Massendurchfluß-Meßwert, Volumendurchfluß-Meßwert, einen Dichte-Meßwert, einen Viskositäts-Meßwert, einen Druck-Meßwert, einen Temperatur-Meßwert, erzeugt, sowie
- einen einlaßseitig des Meßrohrs angeordneten, zwischen diesem und dem Zulaufsegment der Prozeßleitung vermittelnden Strömungskonditionierer, der ein sich zum Meßrohr hin verjüngendes, im Betrieb vom Medium durchströmtes Lumen aufweist,
- wobei ein dem Zulaufsegment der Prozeßleitung zugewandtes Einlaßende des Strömungskonditionierers einen Strömungsquerschnitt aufweist, der größer als der Strömungsquerschnitt des Meßrohrs ist, und ein dem Meßrohr zugewandtes Auslaßende des Strömungskonditionierers einen Strömungsquerschnitt aufweist, der kleiner als der Strömungsquerschnitt des Einlaßendes des Strömungskonditionierers ist, und
- wobei der Strömungskonditionierer wenigstens eine stromaufwärts von dessen Auslaßende angeordnete, in das Lumen des Strömungskonditionierers hineinragende, zirkuläre, erste Innenkante sowie wenigstens eine stromabwärts von der ersten Innenkante angeordnete, gleichfalls in das Lumen des Strömungskonditionierers hineinragende, zirkuläre, zweite Innenkante aufweist, von welchen zwei Innenkanten jede im Betrieb von innerhalb des Strömungskonditionierers geführtem Medium angeströmt ist,
- wobei sich zwischen der in das Lumen des Strömungskonditionierers hineinragenden ersten Innenkante und der in das Lumen des Strömungskonditionierers hineinragenden zweiten Innenkante eine zumindest abschnittsweise bezüglich einer gedachten Längsachse des Strömungskonditionierers im wesentlichen streng konkav geformte, erste Leitfläche des Strömungskonditionierers erstreckt, und
- wobei die in das Lumen des Strömungskonditionierers hineinragende zweite Innenkante eine dem Führen von im Strömungskonditionierer strömendem Medium dienende, sich in Richtung des Auslaßendes des Strömungskonditionierers erstreckende, insb. im wesentlichen konvexe, zweite Leitfläche des Strömungskonditionieres begrenzt.

Darüberhinaus besteht die Erfindung in einem Verfahren zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in einer Prozeßleitung strömenden Mediums mittels eines in den Verlauf der Prozeßleitung eingesetzten Meßsystems, das einen an ein Zulaufsegment der Prozeßleitung angeschlossenen Strömungskonditionierer sowie einen daran angeschlossenen Meßaufnehmer aufweist, welches Verfahren folgende Schritte umfaßt:
- Strömenlassen des zu messen Mediums aus dem Zulaufsegment in den Strömungskonditionierer,
- Beschleunigen des strömenden Mediums in Richtung einer gedachten Längsachse des Strömungskonditionerers und Induzieren wenigstens eines im wesentlichen stationären, insb. auch im wesentlichen ortsfesten, toroidalen Wirbels innerhalb von im Einlaßbereich des Strömungskonditionieres strömenden Medium in der Weise, daß eine größte gedachte Trägheitshauptachse des wenigstens einen toroidalen Wirbels mit der gedachten Längsachse des Strömungskonditionerers und/oder einer gedachten Längsachse des Meßrohrs im wesentlichen koinzidiert,
- Vorbeiströmenlassen von zu messendem Medium an dem wenigstens einen toroidalen Wirbel und Strömenlassen von zu messendem Mediums aus dem Strömungskonditionierer in ein Meßrohr des angeschlossenen Meßaufnehmers, sowie
- Erzeugen wenigstens eines von der zu erfassenden Meßgröße beeinflußten Meßsignals unter Verwendung wenigstens eine primär auf die Meßgröße, insb. auch Änderungen derselben, reagierendes Sensorelement,
- wobei der Schritt des Induzieren des wenigstens einen im wesentlichen stationären toroidalen Wirbels im Einlaßbereich des Strömungskonditionieres Schritte des Vorbeiströmenlassens von Medium an einer in ein Lumen des Strömungskonditionieres hineinragende, insb. entlang einer von dessen Mantellinien geschlossen umlaufenden, ersten Innenkante des Strömungskonditionieres sowie des Vorbeiströmenlassens von Medium an einer in ein Lumen des Strömungskonditionieres hineinragende, insb. entlang einer von dessen Mantellinien geschlossen umlaufenden, stromabwärts der ersten Innenkante angeordneten zweiten Innenkante des Strömungskonditionieres umfaßt.

Nach einer ersten Ausgestaltung des Meßsystems der Erfindung ist vorgesehen, daß jede der in das Lumen des Strömungskonditionierers hineinragenden Innenkanten so ausgebildet und im Strömungskonditionierer angeordnete ist, daß sie im wesentlichen quer zu einer gedachten Längsachse des Strömungskonditionierers und/oder quer zu einer gedachten Längsachse des Meßrohrs ausgerichtet ist.

Nach einer zweiten Ausgestaltung des Meßsystems der Erfindung ist vorgesehen, daß jede der in das Lumen des Strömungskonditionierers hineinragenden Innenkanten, insb. zirkulär, umlaufend und insoweit in sich geschlossen ausgebildet ist.

Nach einer dritten Ausgestaltung des Meßsystems der Erfindung ist vorgesehen, daß die in das Lumen des Strömungskonditionierers hineinragende erste Innenkante in der, insb. unmittelbaren, Nähe des Einlaßendes des Strömungskonditionierers angeordnet ist.

Nach einer vierten Ausgestaltung des Meßsystems der Erfindung ist vorgesehen, daß die in das Lumen des Strömungskonditionierers hineinragende erste Innenkante unmittelbar am Einlaßende des Strömungskonditionierers angeordnet ist.

Nach einer fünften Ausgestaltung des Meßsystems der Erfindung ist vorgesehen, daß die in das Lumen des Strömungskonditionierers hineinragende erste Innenkante einen Kantenradius aufweist, der kleiner als 2 mm, insb. kleiner 0,6 mm, ist.

Nach einer sechsten Ausgestaltung des Meßsystems der Erfindung ist vorgesehen, daß der Strömunsgkonditionierer zumindest in einem Einlaßbereich im wesentlichen kreiszylindrisch geformt ist.

Nach einer siebenten Ausgestaltung des Meßsystems der Erfindung ist vorgesehen, daß das Meßrohr zumindest in einem Einlaßbereich im wesentlichen kreiszylindrisch geformt ist.

Nach einer achten Ausgestaltung des Meßsystems der Erfindung ist vorgesehen, daß der Strömunsgkonditionierer zumindest in einem Auslaßbereich im wesentlichen kreiszylindrisch geformt ist.

Nach einer neunten Ausgestaltung des Meßsystems der Erfindung ist vorgesehen, daß das, insb. kreiszylindrische, Meßrohr im wesentlichen gerade ist.

Nach einer zehnten Ausgestaltung des Meßsystems der Erfindung ist vorgesehen, daß ein Querschnittsverhältnis des Strömungsquerschnitts des Zulaufsegments der Prozeßleitung zum Strömungsquerschnitt des Meßrohrs größer als 1.5 gehalten ist.

Nach einer elften Ausgestaltung des Meßsystems der Erfindung ist vorgesehen, daß ein Querschnittsverhältnis des Strömungsquerschnitts des Zulaufsegments der Prozeßleitung zum Strömungsquerschnitt des Meßrohrs kleiner als 10 gehalten ist.

Nach einer zwölften Ausgestaltung des Meßsystems der Erfindung ist vorgesehen, daß ein Querschnittsverhältnis des Strömungsquerschnitts des Zulaufsegments der Prozeßleitung zum Strömungsquerschnitt des Meßrohrs in einem Bereich zwischen 1.66 und 9.6 gehalten ist.

Nach einer dreizehnten Ausgestaltung des Meßsystems der Erfindung ist vorgesehen, daß ein von der in das Lumen des Strömungskonditionierers hineinragenden erste Innenkante begrenzter Querschnitt des Lumens des Strömungskonditionierers kleiner ist als der Strömungsquerschnitt des Zulaufsegments der Prozeßleitung.

Nach einer vierzehnten Ausgestaltung des Meßsystems der Erfindung ist vorgesehen, daß ein Einschnürungsverhältnis des durch die erste Innenkante begrenzten Querschnitts zum Strömungsquerschnitt des Zulaufsegments der Prozeßleitung kleiner als 0.9 gehalten ist.

Nach einer fünfzehnten Ausgestaltung des Meßsystems der Erfindung ist vorgesehen, daß ein Einschnürungsverhältnis des durch die erste Innenkante begrenzten Querschnitts zum Strömungsquerschnitt des Zulaufsegments der Prozeßleitung größer als 0.1 gehalten ist.

Nach einer sechzehnten Ausgestaltung des Meßsystems der Erfindung ist vorgesehen, daß ein Einschnürungsverhältnis des durch die erste Innenkante begrenzten Querschnitts zum Strömungsquerschnitt des Zulaufsegments der Prozeßleitung in einem Bereich zwischen 0.25 und 0.85 gehalten ist.

Nach einer siebzehnten Ausgestaltung des Meßsystems der Erfindung ist vorgesehen, daß eine Differenz zwischen dem Querschnittsverhältnis und dem Einschnürungsverhältnis größer als 0.5 gehalten ist.

Nach einer achtzehnten Ausgestaltung des Meßsystems der Erfindung ist vorgesehen, daß eine Differenz zwischen dem Querschnittsverhältnis und dem Einschnürungsverhältnis kleiner als 10 gehalten ist.

Nach einer neunzehnten Ausgestaltung des Meßsystems der Erfindung ist vorgesehen, daß eine Differenz zwischen dem Querschnittsverhältnis und dem Einschnürungsverhältnis größer als 0.83 und kleiner als 9.5 gehalten ist.

Nach einer zwanzigsten Ausgestaltung des Meßsystems der Erfindung ist vorgesehen, daß ein Kontraktionsverhältnis des durch die erste Innenkante begrenzten Querschnitts zum Strömungsquerschnitt des Meßrohrs größer als 1.2 gehalten ist.

Nach einer einundzwanzigsten Ausgestaltung des Meßsystems der Erfindung ist vorgesehen, daß ein Kontraktionsverhältnis des durch die erste Innenkante begrenzten Querschnitts zum Strömungsquerschnitt des Meßrohrs kleiner als 5 gehalten ist.

Nach einer zweiundzwanzigsten Ausgestaltung des Meßsystems der Erfindung ist vorgesehen, daß ein Kontraktionsverhältnis des durch die erste Innenkante begrenzten Querschnitts zum Strömungsquerschnitt des Meßrohrs in einem Bereich zwischen 1.3 und 3 gehalten ist.

Nach einer dreiundzwanzigsten Ausgestaltung des Meßsystems der Erfindung ist vorgesehen, daß eine Differenz zwischen dem Querschnittsverhältnis und dem Kontraktionsverhältnis größer als 0.2 gehalten ist.

Nach einer vierundzwanzigsten Ausgestaltung des Meßsystems der Erfindung ist vorgesehen, daß eine Differenz zwischen dem Querschnittsverhältnis und dem Kontraktionsverhältnis kleiner als 10 gehalten ist.

Nach einer fünfundzwanzigsten Ausgestaltung des Meßsystems der Erfindung ist vorgesehen, daß eine Differenz zwischen dem Querschnittsverhältnis und dem Kontraktionsverhältnis größer als 0.25 und kleiner als 8 gehalten ist.

Nach einer sechsundzwanzigsten Ausgestaltung des Meßsystems der Erfindung ist vorgesehen, daß das Meßrohr ein kleineres Kaliber aufweist, als ein einlaßseitig an das Meßsystem angeschlossenes Zulaufsegment der Prozeßleitung.

Nach einer siebenundzwanzigsten Ausgestaltung des Meßsystems der Erfindung ist vorgesehen, daß das dem Zulaufsegment der Prozeßleitung zugewandte Einlaßende des Strömungskonditionierers ein Kaliber aufweist, das größer als ein Kaliber des Meßrohrs ist, und das dem Meßrohr zugewandte Auslaßende des Strömungskonditionierers ein Kaliber aufweist, das kleiner als das Kaliber des Einlaßendes des Strömungskonditionierers ist.

Nach einer achtundzwanzigsten Ausgestaltung des Meßsystems der Erfindung ist vorgesehen, daß die in das Lumen des Strömungskonditionierers hineinragende erste Innenkante dadurch gebildet ist, daß der Innendurchmesser des Einlaßendes des Strömungskonditionierers kleiner gehalten ist, als das Kaliber des Zulaufsegments der Prozeßleitung.

Nach einer neunundzwanzigsten Ausgestaltung des Meßsystems der Erfindung ist vorgesehen, daß ein Kaliberverhältnis des Kaliber des Zulaufsegments der Prozeßleitung zum Kaliber des Meßrohrs größer als 1.1 gehalten ist.

Nach einer dreißigsten Ausgestaltung des Meßsystems der Erfindung ist vorgesehen, daß ein Kaliberverhältnis des Kaliber des Zulaufsegments der Prozeßleitung zum Kaliber des Meßrohrs kleiner als 5 gehalten ist.

Nach einer einunddreißigsten Ausgestaltung des Meßsystems der Erfindung ist vorgesehen, daß ein Kaliberverhältnis des Kalibers des Zulaufsegments der Prozeßleitung zum Kaliber des Meßrohrs in einem Bereich zwischen 1.2 und 3.1 gehalten ist.

Nach einer zweiunddreißigsten Ausgestaltung des Meßsystems der Erfindung ist vorgesehen, daß ein von der in das Lumen des Strömungskonditionierers hineinragenden ersten Innenkante begrenzter Querschnitt des Lumens des Strömungskonditionierers einen Durchmesser aufweist, der kleiner ist als das Kaliber des Zulaufsegments der Prozeßleitung.

Nach einer dreiunddreißigsten Ausgestaltung des Meßsystems der Erfindung ist vorgesehen, daß das Meßrohr eine Einbaulänge aufweist, die größer als eine Einbaulänge des Strömungskonditionierers ist, so daß ein Einbaulängenverhältnis der Einbaulänge des Strömungskonditionierers zur Einbaulänge des Meßrohrs kleiner als eins gehalten ist.

Nach einer vierunddreißigsten Ausgestaltung des Meßsystems der Erfindung ist vorgesehen, daß ein Kaliberverhältnis des Kaliber des Zulaufsegments der Prozeßleitung zum Kaliber des Meßrohrs mindest 10% des Einbaulängenverhältnisse der Einbaulänge des Strömungskonditionierers zur Einbaulänge des Meßrohrs entspricht.

Nach einer fünfunddreißigsten Ausgestaltung des Meßsystems der Erfindung ist vorgesehen, daß das wenigstens eine, insb. im Betrieb in das Medium eintauchende, Sensorelement in einem Abstand vom Einlaßende des Meßrohrs entfernt im und/oder, insb. unmittelbar, am Meßrohr angeordnet ist.

Nach einer sechsunddreißigsten Ausgestaltung des Meßsystems der Erfindung ist vorgesehen, daß das wenigstens eine Sensorelement so plaziert ist, daß ein Verhältnis des Abstands zum Kaliber des Meßrohrs größer als eins gehalten ist.

Nach einer siebenunddreißigsten Ausgestaltung des Meßsystems der Erfindung ist vorgesehen, daß die in das Lumen des Strömungskonditionierers hineinragende erste Innenkante eine dem Aufstauen von daran anströmendem Medium dienende, in einem, insb. zirkulär umlaufenden, Randbereich des Strömungskonditionierers angeordnete Prallfläche des Strömungskonditionieres begrenzt.

Nach einer ersten Weiterbildung der siebenunddreißigsten Ausgestaltung des Meßsystems der Erfindung ist vorgesehen, daß die Prallfläche so im Strömungskonditionierer angeordnet und ausgerichtet, daß sie zumindest abschnittsweise im wesentlichen senkrecht zu einer gedachten Längsachse des Strömungskonditionierers und/oder daß sie abschnittsweise im wesentlichen senkrecht zu einer gedachten Längsachse des Meßrohrs verläuft.
Nach einer zweiten Weiterbildung der siebenunddreißigsten Ausgestaltung des Meßsystems der Erfindung ist vorgesehen, daß die Prallfläche in radialer Richtung eine Höhe aufweist, die wenigstens 1 mm beträgt.
Nach einer dritten Weiterbildung der siebenunddreißigsten Ausgestaltung des Meßsystems der Erfindung ist vorgesehen, daß die Prallfläche als eine Kreisringfläche ausgebildet ist.
Nach einer vierten Weiterbildung der siebenunddreißigsten Ausgestaltung des Meßsystems der Erfindung ist vorgesehen, daß die Prallfläche und die erste Innenkante zumindest anteilig durch eine einlaßseitig im Strömungskonditionierer eingeformte, insb. zirkuläre und/oder in sich geschlossene, Schulter gebildet sind. Nach einer fünften Weiterbildung der siebenunddreißigsten Ausgestaltung des Meßsystems der Erfindung ist vorgesehen, daß die Prallfläche zumindest abschnittsweise im wesentlichen planar ausgebildet ist.
Nach einer sechsten Weiterbildung der siebenunddreißigsten Ausgestaltung des Meßsystems der Erfindung ist vorgesehen, daß die Prallfläche so im Strömungskonditionierer angeordnet und ausgerichtet ist, daß sie abschnittsweise im wesentlichen koplanar zu einem Querschnitt des Strömungskonditionierers und/oder daß sie abschnittsweise im wesentlichen koplanar zu einem Querschnitt des Meßrohrs ist.
Nach einer siebenten Weiterbildung der siebenunddreißigsten Ausgestaltung des Meßsystems der Erfindung ist vorgesehen, daß die Prallfläche zumindest abschnittsweise im wesentlichen konusförmig ausgebildet ist.
Nach einer achten Weiterbildung der siebenunddreißigsten Ausgestaltung des Meßsystems der Erfindung ist vorgesehen, daß die Prallfläche sich zum Meßrohr hin verjüngend ausgebildet ist.

Nach einer neunten Weiterbildung der siebenunddreißigsten Ausgestaltung des Meßsystems der Erfindung ist vorgesehen, daß die Prallfläche sich zum Einlaßende des Strömungskonditionieres hin aufweitend ausgebildet ist.
Nach einer zehnten Weiterbildung der siebenunddreißigsten Ausgestaltung des Meßsystems der Erfindung ist vorgesehen, daß die Prallfläche und die erste Innenkante zumindest anteilig durch einen einlaßseitig im Strömungskonditionierer eingeformten, insb. sich zu dessen Einlaßende hin erstreckenden, sich zum Meßrohr hin verjüngenden Innenkonus gebildet sind.
Nach einer elften Weiterbildung der siebenunddreißigsten Ausgestaltung des Meßsystems der Erfindung ist vorgesehen, daß der die Prallfläche des Strömungskonditionieres bildende Innenkonus einen Flankenwinkel aufweist, der größer als 45°, insb. größer als 60°, ist.
Nach einer zwölften Weiterbildung der siebenunddreißigsten Ausgestaltung des Meßsystems der Erfindung ist vorgesehen, daß der die Prallfläche des Strömungskonditionieres bildende Innenkonus einen Flankenwinkel aufweist, der kleiner als 90°, insb. kleiner als 88°, ist.
Nach einer dreizehnten Weiterbildung der siebenunddreißigsten Ausgestaltung des Meßsystems der Erfindung ist vorgesehen, daß der die Prallfläche des Strömungskonditionieres bildende Innenkonus einen Flankenwinkel aufweist, der größer als 60° und der kleiner als 88° ist.

Nach einer achtunddreißigsten Ausgestaltung des Meßsystems der Erfindung ist vorgesehen, daß die erste Leitfläche bezüglich einer gedachten Längsachse des Strömungskonditionierers, insb. überwiegend oder gänzlich, konkav geformt ist.

Nach einer neununddreißigsten Ausgestaltung des Meßsystems der Erfindung ist vorgesehen, daß die, insb. konisch ausgebildete, zweite Leitfläche des Strömungskonditionieres zumindest abschnittsweise bezüglich einer gedachten Längsachse des Strömungskonditionierers konvex geformt ist.

Nach einer vierzigsten Ausgestaltung des Meßsystems der Erfindung ist vorgesehen, daß die zweite Leitfläche des Strömungskonditionieres sich zum Meßrohr hin verjüngend ausgebildet ist.

Nach einer einundvierzigsten Ausgestaltung des Meßsystems der Erfindung ist vorgesehen, daß die zweite Leitfläche des Strömungskonditionieres im wesentlichen konisch geformt ist.

Nach einer zweiundvierzigsten Ausgestaltung des Meßsystems der Erfindung ist vorgesehen, daß die zweite Leitfläche und die zweite Innenkante zumindest anteilig durch einen einlaßseitig im Strömungskonditionierer eingeformten, insb. sich zu dessen Auslaßende hin erstreckenden, Innenkonus gebildet sind.
Nach einer ersten Weiterbildung der zweiunvierzigsten Ausgestaltung des Meßsystems der Erfindung ist vorgesehen, daß der die zweite Leitfläche des Strömungskonditionieres bildende Innenkonus einen Flankenwinkel aufweist, der größer als 2°, insb. größer 4°, als ist.
Nach einer zweiten Weiterbildung der zweiunvierzigsten Ausgestaltung des Meßsystems der Erfindung ist vorgesehen, daß der die zweite Leitfläche des Strömungskonditionieres bildende Innenkonus einen Flankenwinkel aufweist, der kleiner als 45°, insb. kleiner als 10°, ist.
Nach einer dritten Weiterbildung der zweiunvierzigsten Ausgestaltung des Meßsystems der Erfindung ist vorgesehen, daß der die zweite Leitfläche des Strömungskonditionieres bildende Innenkonus einen Flankenwinkel aufweist, der größer als 4° und der kleiner als 10° ist.

Nach einer dreiundvierzigsten Ausgestaltung des Meßsystems der Erfindung ist vorgesehen, daß die wenigstens eine in das Lumen des Strömungskonditionierers hineinragende erste Innenkante eine dem Aufstauen von daran anströmendem Medium dienende, in einem, insb. zirkulär umlaufenden, Randbereich des Strömungskonditionierers angeordnete Prallfläche des Strömungskonditionieres sowie eine dem Führen von im Strömungskonditionierer strömendem Medium dienende, sich in Richtung des Auslaßende des Strömungskonditionierers erstreckende Leitfläche des Strömungskonditionieres begrenzt.
Nach einer ersten Weiterbildung der dreiundvierzigsten Ausgestaltung des Meßsystems der Erfindung ist vorgesehen, daß die Prallfläche durch einen einlaßseitig im Strömungskonditionierer eingeformten, sich in Richtung von dessen Einlaßende erstreckenden ersten Innenkonus und die Leitfläche durch einen einlaßseitig im Strömungskonditionierer eingeformten, sich in Richtung von dessen Auslaßende erstreckenden zweiten Innenkonus gebildet sind.
Nach einer zweiten Weiterbildung der dreiundvierzigsten Ausgestaltung des Meßsystems der Erfindung ist vorgesehen, daß der die Prallfläche bildende erste Innenkonus einen Flankenwinkel aufweist, der größer ist als ein Flankenwinkel des die Prallfläche bildenden zweiten Innenkonus.
Nach einer dritten Weiterbildung der dreiundvierzigsten Ausgestaltung des Meßsystems der Erfindung ist vorgesehen, daß der die Prallfläche des Strömungskonditionieres bildende erste Innenkonus einen Flankenwinkel aufweist, der größer als 45°, insb. größer als 60°, und der kleiner als 90°, insb. kleiner als 88°, ist, und daß der die Leitfläche des Strömungskonditionieres bildende zweite Innenkonus einen Flankenwinkel aufweist, der größer als 2°, insb. größer als 4°, und der kleiner als 45°, insb. kleiner als 10°, ist.

Nach einer vierundvierzigsten Ausgestaltung des Meßsystems der Erfindung ist vorgesehen, daß das wenigstens eine Sensorelement mittels wenigstens eines piezoelektrischen und/oder mittels wenigstens eines piezoresistiven Elements gebildet ist.

Nach einer fünfundvierzigsten Ausgestaltung des Meßsystems der Erfindung ist vorgesehen, daß das wenigstens eine Sensorelement mittels wenigstens einer mit einem Anker korrespondierenden Tauchspule gebildet ist.

Nach einer sechsundvierzigsten Ausgestaltung des Meßsystems der Erfindung ist vorgesehen, daß das wenigstens eine Sensorelement mittels wenigstens einer im Meßrohr strömendes Medium berührenden, elektrische Potentiale abgreifenden Meßelektrode gebildet ist.

Nach einer siebenundvierzigsten Ausgestaltung des Meßsystems der Erfindung ist vorgesehen, daß das wenigstens eine Sensorelement mittels wenigstens eines auf Veränderungen der Meßgröße reagierenden Meßkondensators gebildet ist.

Nach einer achtundvierzigsten Ausgestaltung des Meßsystems der Erfindung ist vorgesehen, daß das wenigstens eine Sensorelement mittels wenigstens eines elektrischen Widerstandes gebildet ist.

Nach einer neunundvierzigsten Ausgestaltung des Meßsystems der Erfindung ist vorgesehen, daß das wenigstens Sensorelement im Betrieb unter Einwirkung des im Meßrohr strömenden Mediums wiederholt mechanischen Verformungen unterworfen ist.

Nach einer fünfzigsten Ausgestaltung des Meßsystems der Erfindung ist vorgesehen, daß das wenigstens Sensorelement im Betrieb unter Einwirkung des im Meßrohr strömenden Mediums wiederholt relativ zu einer statischen Ruhelage bewegt ist.

Nach einer einundfünfzigsten Ausgestaltung des Meßsystems der Erfindung ist vorgesehen, daß der Meßaufnehmer wenigstens einen im Meßrohr angeordneten Staukörper umfaßt.

Nach einer zweiundfünfzigsten Ausgestaltung des Meßsystems der Erfindung ist vorgesehen, daß das wenigstens eine, insb. zumindest anteilig in das Meßrohr hineinragende, Sensorelement der Sensoranordnung stromabwärts des wenigstens einen Staukörpers angeordnet ist.

Nach einer dreiundfünfzigsten Ausgestaltung des Meßsystems der Erfindung ist vorgesehen, daß der Meßaufnehmer als ein Wirbel-Durchflußaufnehmer, insb. ein Wirbelstraßen-Durchflußaufnehmer, ausgebildete ist.

Nach einer vierundfünfzigsten Ausgestaltung des Meßsystems der Erfindung ist vorgesehen, daß der Meßaufnehmer als ein magnetisch-induktiver Durchflußaufnehmer ausgebildet ist.

Nach einer fünfundfünfzigsten Ausgestaltung des Meßsystems der Erfindung ist vorgesehen, daß der Meßaufnehmer als ein Durchflußaufnehmer vom Vibrationstyp, insb. um eine Corilolis-Massedurchflußaufnehmer, einen Dichteaufnehmer, und/oder einen Viskositätsaufnehmer, ausgebildet ist.
Nach einer zweiundfünfzigsten Ausgestaltung des Meßsystems der Erfindung ist vorgesehen, daß der Meßaufnehmer als ein Ultraschall-Durchflußaufnehmer ausgebildet ist.

Nach einer sechsundfünfzigsten Ausgestaltung des Meßsystems der Erfindung ist vorgesehen, daß ein von der in das Lumen des Strömungskonditionierers hineinragenden ersten Innenkante begrenzter Querschnitt des Lumens des Strömungskonditionierers größer ist als ein von der in das Lumen des Strömungskonditionierers hineinragenden zweiten Innenkante begrenzter Querschnitt des Lumens des Strömungskonditionierers.

Nach einer siebenundfünfzigsten Ausgestaltung des Meßsystems der Erfindung ist vorgesehen, daß ein von der in das Lumen des Strömungskonditionierers hineinragenden zweiten Innenkante begrenzter Querschnitt des Lumens des Strömungskonditionierers kleiner als der Strömungsquerschnitt des Zulaufsegments der Prozeßleitung, insb. kleiner als der Strömungsquerschnitt des Einlaßendes des Strömungskonditionierers, ist.

Nach einer achtundfünfzigsten Ausgestaltung des Meßsystems der Erfindung ist vorgesehen, daß ein Einschnürungsverhältnis des durch die zweite Innenkante begrenzten Querschnitts zum Strömungsquerschnitt des Zulaufsegments der Prozeßleitung kleiner als 0.9 gehalten ist.

Nach einer neunundfünfzigsten Ausgestaltung des Meßsystems der Erfindung ist vorgesehen, daß ein Einschnürungsverhältnis des durch die zweite Innenkante begrenzten Querschnitts zum Strömungsquerschnitt des Zulaufsegments der Prozeßleitung größer als 0.1 gehalten ist.

Nach einer sechzigsten Ausgestaltung des Meßsystems der Erfindung ist vorgesehen, daß ein Einschnürungsverhältnis des durch die zweite Innenkante begrenzten Querschnitts zum Strömungsquerschnitt des Zulaufsegments der Prozeßleitung in einem Bereich zwischen 0.19 und 0.78 gehalten ist.
Nach einer einundsechzigsten Ausgestaltung des Meßsystems der Erfindung ist vorgesehen, daß ein Kontraktionsverhältnis des durch die zweite Innenkante begrenzten Querschnitts zum Strömungsquerschnitt des Meßrohrs größer als 0.9 gehalten ist.

Nach einer zweiundsechzigsten Ausgestaltung des Meßsystems der Erfindung ist vorgesehen, daß ein Kontraktionsverhältnis des durch die zweite Innenkante begrenzten Querschnitts zum Strömungsquerschnitt des Meßrohrs kleiner als 5 gehalten ist.

Nach einer dreiundsechzigsten Ausgestaltung des Meßsystems der Erfindung ist vorgesehen, daß ein Kontraktionsverhältnis des durch die zweite Innenkante begrenzten Querschnitts zum Strömungsquerschnitt des Meßrohrs in einem Bereich zwischen 0.9 und 2.5 gehalten ist.
Nach einer ersten Weiterbildung der dreiundsechzigsten Ausgestaltung des Meßsystems der Erfindung ist vorgesehen, daß eine Differenz zwischen einem Querschnittsverhältnis des Strömungsquerschnitts des Zulaufsegments der Prozeßleitung zum Strömungsquerschnitt des Meßrohrs und dem Kontraktionsverhältnis größer als 0.2 gehalten ist.
Nach einer zweiten Weiterbildung der dreiundsechzigsten Ausgestaltung des Meßsystems der Erfindung ist vorgesehen, daß eine Differenz zwischen einem Querschnittsverhältnis des Strömungsquerschnitts des Zulaufsegments der Prozeßleitung zum Strömungsquerschnitt des Meßrohrs und dem Kontraktionsverhältnis kleiner als 10 gehalten ist.
Nach einer dritten Weiterbildung der dreiundsechzigsten Ausgestaltung des Meßsystems der Erfindung ist vorgesehen, daß eine Differenz zwischen einem Querschnittsverhältnis des Strömungsquerschnitts des Zulaufsegments der Prozeßleitung zum Strömungsquerschnitt des Meßrohrs und dem Kontraktionsverhältnis größer als 0.4 und kleiner als 8 gehalten ist.

Nach einer vierundsechzigsten Ausgestaltung des Meßsystems der Erfindung ist vorgesehen, daß die erste Leitfläche zumindest anteilig durch eine im Strömungskonditionierer eingeformte, insb. zirkuläre und/oder umlaufende, Rille oder Nut gebildet ist.

Nach einer fünfundsechzigsten Ausgestaltung des Meßsystems der Erfindung ist vorgesehen, daß die erste Leitfläche durch eine im Strömungskonditionierer eingeformte Ringnut gebildet ist.

Nach einer sechsundsechzigsten Ausgestaltung des Meßsystems der Erfindung ist vorgesehen, daß die erste Leitfläche durch einen im Strömungskonditionierer eingeformten Innenkonus gebildet ist.

Nach einer ersten Ausgestaltung des Verfahrens der Erfindung umfaßt dieses weiters einen Schritt des Induzierens wenigstens eines weiteren im wesentlichen stationären, insb. im wesentlichen ortsfesten, toroidalen Wirbels im Einlaßbereich des Strömungskonditionieres in der Weise, daß die größte gedachte Trägheitshauptachse jedes der wenigstens zwei toroidalen Wirbel zueinander im wesentlichen parallel verlaufen und/oder zumindest in axialer Verlängerung miteinander im wesentlichen koinzidieren.

Nach einer zweiten Ausgestaltung des Verfahrens der Erfindung umfaßt dieses weiters Schritte des Anströmenlassens von Medium an eine dem strömendem Medium in einem, insb. entlang einer Mantellinien des Strömungskonditionierers geschlossen umlaufenden, Randbereich des Strömungskonditionierers entgegenstehenden Prallfläche des Strömungskonditionierers zum Induzieren im wesentlichen stationären toroidalen Wirbeln im Einlaßbereich des Strömungskonditionierers.

Ein Grundgedanke der Erfindung besteht darin, die Meßgenauigkeit von Meßsystemen der beschriebnen Art nicht nur dadurch zu verbessern, daß die Strömung ausreichend beschleunigt und somit sicher in einen günstigen Reynoldszahlbereich transformiert wird, sondern auch dadurch, daß einerseits allfällig stromaufwärts des Meßsystems in die Strömung eingetragene Störungen, wie z.B. in deren rohrwandnahen Randbereichen "mitschwimmende" Wirbel, mittels des dem eigentlichen Meßaufnehmer vorgeschalteten Strömungskonditionierers weitgehend zu eliminieren und somit anderseits mittels des Strömungskonditionierers ein weitgehend störunempfindliches, für das Meßprinzip ausreichend gut reproduzierbares Strömungsprofil für das in den Meßaufnehmer einströmende Medium einzustellen. Dies erfolgt bei dem erfindungsgemäßen Meßsystem im besonderen dadurch, daß in dessen Einlaufbereich wenigstens ein im wesentlichen toroidaler Wirbel erzeugt wird, der zumindest in einem stationären Zustand weitgehend ortsfest gehalten ist. Dieser stationäre Wirbel wirkt für das vorbeiströmenden Medium praktisch als eine zusätzliche Querschnittsverengung und insoweit effektiv als eine "virtuelle" Düse, die innerhalb des strömenden Mediums intrinsisch gebildet ist. Eine besondere Eigenschaft einer solchen "virtuellen" Düse besteht u.a. darin, daß sie vor dem Einlaufbereich in die Strömung allfällig induzierte Störungen weitgehend eliminiert und darüber hinaus stromab ein weitgehend ungestörtes Strömungsprofil praktisch neu aufbaut. Dabei paßt sich die Größe und Stärke des toroidalen Wirbels erfreulicherweise sogar an Größe und Stärke der einlaufenden Störung an, so daß die so geschaffene "virtuelle" Düse praktisch im Sinne einer wirkungsvollen Störungsbeseitigung selbst adaptierend ist.

Die Erfindung basiert dabei auf der überraschenden Erkenntnis, daß ein solcher stationärer, insb. auch weitgehend ortsfester, Wirbel mittels im Einlaufbereich des Meßsystems plazierten, in einem Randbereich des vom Medium durchströmten Lumens als definierte Störung wirkenden Strömungshindernisse - hier zwei in Strömungsrichtung aufeinanderfolgenden möglichst scharfen und möglichst vollständig, insb. zirkulär, umlaufenden Innenkanten - im Zusammenspiel mit einer zwischen den Innenkanten bzw. diesen und dem Auslaßende des Strömunsgkonditionieres vermittelnden Leitflächen erzielt werden kann. Die konkave Leitfläche zwischen den beiden Innenkanten - die in vorteilhafter Weise im wesentlichen einer Mantelfläche eines Segments, insb. etwa in der Größenordnung zwischen einem ½- Segement bis etwa einem 1/5-Segement, einer Toroidschale oder einer Mantelfläche eines ähnlichen Tonnenkörpers möglichst entsprechen sollte - eröffnet dem Wirbel einen Raum, in dem er sich - geschützt vom übrigen Teil der Strömung - weitgehend ungestört und somit auch definiert ausbilden kann. Dies wiederum ist der Ortsfestigkeit des Wirbels förderlich und unterstützt zusätzlich den Effekt, daß Größe und Gestalt des Wirbels sich optimal an die momentanen Strömungsverhältnisse innerhalb des Strömungskonditionierers anpassen können. Desweiteren bewirkt die zwischen den beiden Leitflächen vermittelnde zweite Innenkante eine Begrenzung einer maximalen Größe des Wirbels auch in axialer Richtung und somit eine zusätzliche Stabilisierung desselben.

Als Folge des toroidalen Wirbels und der damit einhergehenden Strömungslenkung entsteht stromab desselben ein Strömungsprofil, daß bereits nach sehr kurzer Lauflänge im Strömungskonditionierer, zumindest aber bei Eintritt in das nachfolgenden Meßrohr erfreulicherweise im wesentlichen einem vollausgebildeten turbulenten Rohrprofil entspricht.

Die Wirkung der mittels des toroidalen Wirbels erzeugten "virtuellen" Düse läßt sich zudem dadurch noch weiter verbessern, daß stromaufwärts des mittels der Innenkante erzeugten Wirbels ein weiterer, gleichermaßen möglichst ortsfester Wirbel stationiert im Strömungskonditionierer wird, gegebenenfalls auch unmittelbar vor diesem. Dies kann bei dem erfindungsgemäßen Strömungskonditionierer auf konstruktiv sehr einfache Weise dadurch erreicht werden, daß eine von der einlaßseitigen ersten Innenkante begrenzte, insb. zirkulär weitgehend gleichmäßig umlaufende, Prallfläche deutlich ausgeprägt ist, so daß sie dem anströmenden Medium in ein einer für die Wirbelbildung ausreichenden Weise als ein Strömung stauendes Strömungshindernis entgegen wirkt.

Durch die Ausbildung von zwei solchen toroidalen, insb. auch zueinander weitgehend konzentrisch ausgerichteten, Wirbeln können einerseits im einströmenden Medium mitschwimmende Wirbel besser aufgenommen und somit wirksamer eliminiert werden. Anderseits wird mittels zweier solcher hintereinander stehend, konzentrischen Wirbeln die für die Strömung effektiv wirksame Kontur der so gebildeten "virtuellen" Düse einer insgesamt konvexen Form und dementsprechend der Strömungsverlauf, insb. wandnaher Strömungsanteile, im gesamten Einlaßbereich des Meßsystem praktisch einer konkavo-konvexen Form, wie etwa einer S-Form, angenährt. Dies wiederum begünstigt in besonderem Maße die Ausbildung eines für die nachfolgende Messung sehr gut geeigneten, gleichermaßen auch über einen weiten Anwendungsbereich gut reproduzierbaren Strömungsprofils. Somit kann trotz allfällig gestörter Strömung im Zulaufsegment dem Meßaufnehmer über den Strömungskonditionierer Medium mit einem solchen Strömungsprofil zugeführt werden, das einer kalibrierten Situation zumindest weitgehend ähnlich ist.

Die Verwendung eines Strömungskonditionierers gemäß der vorliegenden Erfindung hat beispielsweise bei den eingangs erwähnten Vortex-Meßgeräten u.a. auch den Vorteil, daß sie trotz vergleichsweise großer Unterschiede zwischen dem Kalibern des Zulaufsegments der angeschlossenen Prozeßleitung und dem Kaliber des Meßrohr, z.B. über zwei nominelle Nennweitenstufen, auch für die Messung von vergleichsweise langsam strömenden Gasen geeignet sind.
- Fig. 1: zeigt perspektivisch in einer Seitenansicht ein Meßsystem für ein in einer Prozeßleitung strömendes Medium,
- Fig. 2, 3: zeigen einen für die Verwendung in einem Meßsystem gemäß Fig. 1 geeigneten, nach dem Vortex-Prinzip arbeitenden Wirbel-Meßaufnehmer, und
- Fig. 4 bis 6: zeigen schematisch in längsgeschnittenen Ansichten Einzelheiten des Meßsystems gemäß Fig. 1.

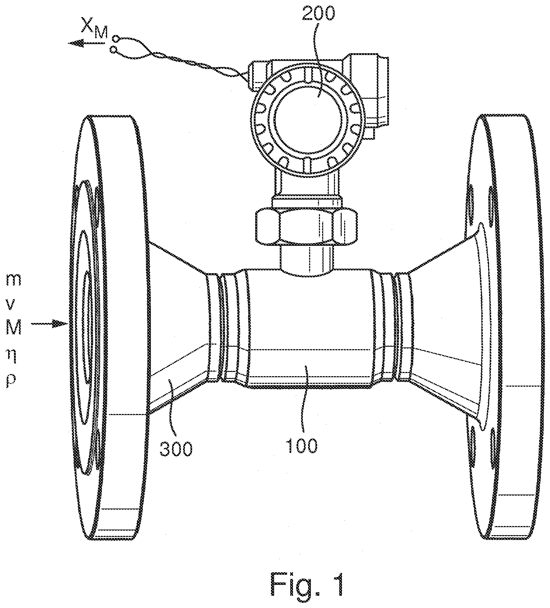

In der Fig. 1 ist ein gegebenenfalls auch modular aufgebautes, Meßsystem schematisch dargestellt, das dafür geeignet und dafür vorgesehen ist, wenigstens eine Meßgröße, insb. einen Massendurchfluß *m* und/oder Volumendurchfluß *v* und/oder eine Strömungsgeschwindigkeit u und/oder einen andern Strömungsparameter eines in einer - hier nicht dargestellten - Prozeßleitung strömenden Mediums, beispielsweise einer Flüssigkeit, einem Gas, einem Dampf oder dergleichen, sehr robust zu messen und in wenigstens einen entsprechenden Messwert X_{M} abzubilden. Das Meßsystem umfaßt dafür wenigstens ein In-Line-Meßgerät für strömende Medien, das mittels eines entsprechenden Meßaufnehmers 100 sowie einer mit diesem zumindest zeitweise elektrisch gekoppelte Meßelektronik des Meßsystems gebildet ist. Das In-Line-Meßgerät umfaßt einen im Betrieb vom zumessenden Medium durchströmten Meßaufnehmer 100 sowie ein Elektronik-Gehäuse 200, in dem eine mit dem Meßaufnehmer 100 elektrisch verbundene - hier nicht näher zu erläuternde - Meßelektronik untergebracht ist.

Der Meßaufnehmer 100 weist wenigstens ein in den Verlauf der, insb. als Rohrleitung ausgebildeten, Prozeßleitung eingesetztes Meßrohr auf, durch das im Betrieb des Meßsystems zumindest zeitweise das zu messenden Medium hindurch strömen gelassen wird. Das In-Line-Meßgerät ist im besonderen dafür vorgesehen, zumindest zeitweise wenigstens ein Meßsignal zu erzeugen, das von wenigstens einem physikalischen Parameter, insb. einer Strömungsgeschwindigkeit, einem Massendurchfluß *m*, einem Volumendurchfluß *v,* einer Dichte *ρ* und/oder einer Viskosität *η*, des im Meßrohr befindlichen Mediums beeinflußt ist und insoweit mit der Meßgröße entsprechend korrespondiert. Zum Erzeugen des wenigstens einen Meßsignals dient hierbei eine am Meßrohr und/oder in dessen Nähe angeordnete Sensoranordnung des In-Line-Meßgeräts, die zumindest mittelbar auf Änderungen der wenigstens einen Meßgröße des Mediums in einer das wenigstens eine Meßsignal entsprechend beeinflussenden Weise reagiert.

Gemäß einer vorteilhaften Ausgestaltung der Erfindung ist die Meßelektronik ferner so ausgelegt, daß sie im Betrieb das Meßsystem mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beipielsweise einem Feldbussystem, Meß- und/oder andere Betriebsdaten, insb. auch den wenigstens einen Messwert X_{M}, austauschen kann. Für diesen vorgenannten Fall, daß das Meßsystem für eine Ankopplung an ein Feldbus- oder ein anderes Kommunikationssystem vorgesehen ist, weist die Meßgerät-Elektronik eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Auch hierfür können in beispielsweise in der industriellen Meß- und Automatisierungstechnik entsprechend etablierte Standardschnittstellen zum Einsatz kommen. Von Darüber hinaus kann auch die externe Energieversorgung an das Feldbussystem angeschlossen sein und das Meßsystem in der vorbeschriebenen Weise direkt via Feldbussystem mit Energie versorgen.

Im hier gezeigten Ausführungsbeispiel dient ein Wirbeldurchfluß-Meßgerät als In-Line-Meßgerät, das bekanntlich gut für die Messung von Gasen geeignet ist, die physkalische Meßgröße, insb. den Massendurchfluß *m*, die Dichte *ρ* und/oder die Viskosität *η*, des zu messenden Mediums hochgenau zu erfassen. Allerdings können hierbei auch andere, in der Prozeßautomatisierungstechnik gleichermaßen etablierte In-Line-Meßgeräte zum Ermitteln der Meßgröße verwendet werden, wie z.B. magnetisch-induktive Durchflußmesser, Coriolis-Durchflußmeßgeräte, thermische Durchflußmesser, Differenzdruck-Durchflußmesser, Ultraschall-Durchflußmeßgeräte oder dergleichen.

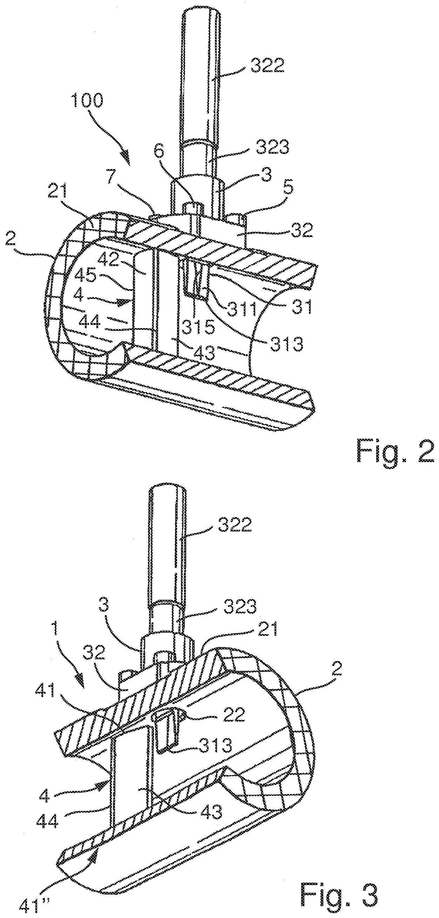

Die in den Fig. 2 und 3 gezeigten und der Übersicht dienenden perspektivischen Ansichten eines Ausführungsbeispiel für einen Wirbel-Meßaufnehmer nach dem Vortex-Prinzip zeigen, einerseits in Strömungsrichtung gesehen (Fig. 2) und andererseits gegen die Strömungsrichtung gesehen (Fig. 3), einen teilweise aufgeschnittenen Meßsaufnehmer 1 eines Vortex-Durchflußmeßgeräts mit einem an einer Rohrwand 21 eines Meßrohrs 2 fixierten und durch eine Bohrung 22 hindurch ragenden Wirbelsensor 3. Dieser kann beispielsweise ein dynamisch kompensierter Wirbelsensor mit einem kapazitiven Sensorelement, wie er in der US-A 60 03 384 beschrieben ist, sein.

Entlang eines Durchmessers des Meßrohrs 2 ist in dessen Innerem ein Staukörper 4 angeordnet, der mit dem Meßrohr 2 unter Bildung einer dargestellten ersten Fixierstelle 41 und einer verdeckten zweiten Fixierstelle 41* fest verbunden ist. Das Zentrum der Bohrung 22 und das Zentrum der Fixierstelle 41 liegen auf einer Mantellinie des Meßrohrs 2.

Der Staukörper 4 hat eine Prallfläche 42, gegen die im Betrieb ein zu messendes Medium, z. B. eine Flüssigkeit, ein Gas oder ein Dampf, anströmt. Der Staukörper 4 hat ferner zwei Seitenflächen, von denen lediglich eine (vordere) Seitenfläche 43 in den Fig. 1 und 2 zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 1 zu sehen sind.

Der Staukörper 4 der Fig. 1 und 2 hat im wesentlichen die Form einer geraden Dreieck-Säule, also einer Säule mit einem dreieckigen Querschnitt. Es können jedoch auch andere für solche Vortex-Durchflußmeßgeräte übliche Formen des Staukörpers verwendet werden.

Durch das Anströmen des Mediums gegen die Prallfläche 42 bildet sich stromabwärts vom Staukörper 4 in der bekannten Weise eine Karman'sche Wirbelstrasse dadurch aus, daß an jeder Abrißkante abwechselnd Wirbel abreißen und vom strömenden Medium mitgenommen werden. Diese Wirbel erzeugen lokale Druckschwankungen im strömenden Medium, deren zeitbezogene Abriss-Häufigkeit, also deren sogenannte Wirbelfrequenz, ein Maß für die Strömungsgeschwindigkeit und/oder den Volumendurchfluß des Mediums ist.

Die Druckschwankungen werden mittels des Wirbelsensors 3 in ein als elektrisches Meßsignal dienendes Wirbelsignal umgeformt, das einer im Elektronik-Gehäuse untergebrachten - hier jedoch nicht gezeigten und nicht näher erläuterten - Meßelektronik zugeführt wird, die daraus beispielsweise die Strömungsgeschwindigkeit und/oder den Volumendurchfluß des strömenden Mediums entsprechend berechnet.

Der Wirbelsensor 3 ist stromabwärts vom Staukörper 4 in die Bohrung 22 der Rohrwand 21 des Meßrohrs 2 eingesetzt und dichtet die Bohrung 22 zur Mantelfläche des Meßrohrs 2 hin ab, wozu der Wirbelsensor 3 mit der Rohrwand 21 verschraubt ist. Hierzu dienen z. B. vier Schrauben, von denen in den Fig. 1 und 2 die Schrauben 5,6, 7 zu sehen sind, während in Fig. 3 zugehörige Bohrungen 50, 60, 70, 80 dargestellt sind.

Vom Wirbelsensor 3 ist eine in den Fig. 1 und 2 in das Innere des Meßrohrs 2 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünnerwandigen Zwischenstücks 323 in eine Verlängerung 322 aus, vgl. die erwähnte US-A 60 03 384.

Die Sensorfahne 31 hat Hauptflächen, von denen in den Fig. 1 und 2 nur die Hauptfläche 311 zu sehen ist. Die Hauptflächen fluchten mit der erwähnten Mantellinie des Meßrohrs 2 und bilden eine Frontkante 313. Die Sensorfahne 31 kann auch andere geeignete Raumformen haben; so kann sie z.B. zwei parallele Hauptflächen aufweisen, die zwei parallele Frontkanten bilden.

Die Sensorfahne 31 ist kürzer als der Durchmesser des Meßrohrs 2; sie ist ferner biegesteif und weist ein entsprechendes Sackloch auf. Damit das Sackloch einen ausreichenden Durchmesser hat, treten aus den Hauptflächen Wandteile hervor, von denen in Fig. 3 der Wandteil 315 angedeutet ist. Das Sackloch reicht möglichst bis in die Nähe der Frontkante 313 und hat dort einen Boden.

Zum Wirbelsensor 3 gehört ferner eine die Bohrung 22 überdeckende Membran mit einer dem Medium zugewandten ersten Oberfläche und einer vom Medium abgewandten zweiten Oberfläche. An der ersten Oberfläche ist die Sensorfahne 31 fixiert und an der zweiten Oberfläche ein physikalisch-elektrisches Sensorelement. Die Sensorfahne 31, die Membran, deren ringförmiger Rand und der an der Membran 33 befestigte Teil des Sensorelements 36 können beispielsweise aus einem einzigen Materialstück, z. B. Metall, insb. Edelstahl, hergestellt sein. Das Sensorelement 36 erzeugt das oben erwähnte Signal, dessen Frequenz proportional zum Volumendurchfluss des strömenden Mediums ist.

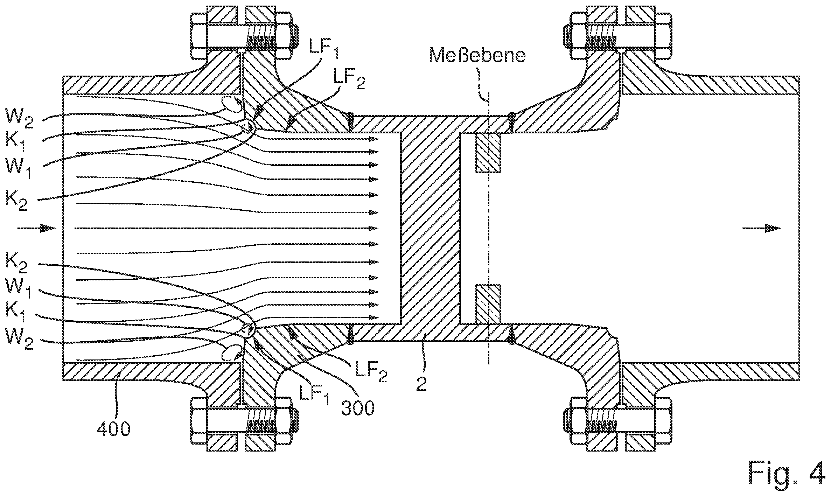

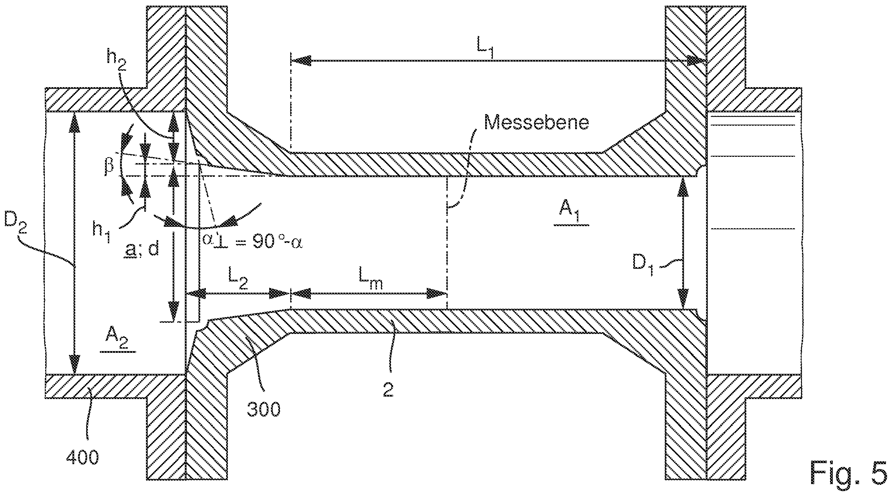

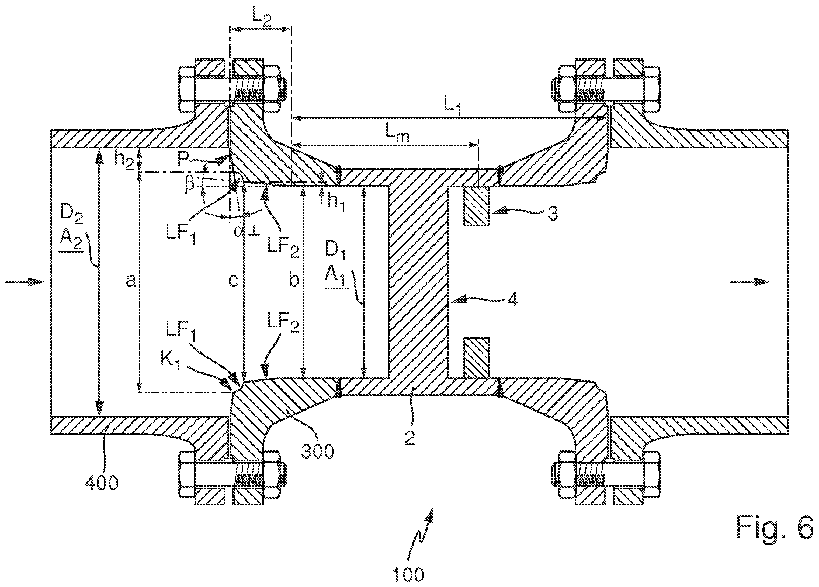

Beim erfindungsgemäßen Meßsystem weist das dem Führen von zu messendem Medium dienenden, insb. im wesentlichen gerade, Meßrohr, wie jeweils in den Fig. 4, 5 und 6 schematisch dargestellt, einen kleineren Strömungsquerschnitt A1 auf, als ein einlaßseitig an das Meßsystem angeschlossenes Zulaufsegment 400 der Prozeßleitung. Daher umfaßt das Meßsystem ferner einen einlaßseitig des Meßrohrs angeordneten, zwischen diesem und dem Zulaufsegment der Prozeßleitung vermittelnden Strömungskonditionierer 300, der ein sich zum Meßrohr 2 hin verjüngendes, im Betrieb vom Medium durchströmtes Lumen aufweist. Ein dem Zulaufsegment der Prozeßleitung zugewandtes Einlaßende des Strömungskonditionierers weist dabei einen Strömungsquerschnitt a auf, der größer als der Strömungsquerschnitt A1 des Meßrohrs ist, während ein dem Meßrohr zugewandtes Auslaßende des Strömungskonditionierers einen Strömungsquerschnitt aufweist, der kleiner als der Strömungsquerschnitt des Einlaßendes des Strömungskonditionierers ist. Darüberhinaus weist der Strömungskonditionierer wenigstens eine stromaufwärts von dessen Auslaßende angeordnete, in das Lumen des Strömungskonditionierers hineinragende, insb. entlang einer Mantellinie des Strömungskonditionierers umlaufende und/oder zirkuläre, erste Innenkante K1 sowie wenigstens eine stromabwärts von der ersten Innenkante K1 angeordnete, gleichfalls in das Lumen des Strömungskonditionierers hineinragende, insb. entlang einer Mantellinie des Strömungskonditionierers umlaufende und/oder zirkuläre, zweite Innenkante K2 auf, wobei jede der beiden Innenkanten im Betrieb von durch den Strömungskonditionierer hindurch geführtem Medium angeströmt ist.

Für den Fall, daß Medium durch den Strömungskonditionierer strömt bildet sich zwischen der ersten Innenkante K1 und der zweiten Innenkante K2 ein im wesentlichen toroidaler, zumindest im stationären Zustand weitgehend ortsfester erster Wirbel w1 aus. Jede der Innenkanten K1, K2 ist gemäß einer Ausgestaltung der Erfindung so ausgebildet und jeweils so im Strömungskonditionierer angeordnet, daß sie im wesentlichen quer zu einer gedachten Längsachse des Strömungskonditionierers und/oder quer zu einer gedachten Längsachse des Meßrohrs ausgerichtet ist. Ferner ist jede der Innenkanten gemäß einer weiteren Ausgestaltung der Erfindung, insb. zirkulär, umlaufend und insoweit in sich geschlossen ausgebildet. Im hier gezeigten Ausführungsbeispiel ist die erste Innenkante zudem in der, insb. unmittelbaren, Nähe des Einlaßendes des Strömungskonditionierers angeordnet. Da sich besonders gute Ergebnisse mit vergleichsweise scharfen Innenkanten erzielt werden können, weist jeder der Innenkanten in einer vorteilhaften Ausgestaltung jeweils einen Kantenradius auf, der kleiner als 2 mm, insb. kleiner 0,6 mm, ist.

Bei der hier gezeigten Konfiguration des Strömunsgkonditionieres bildet sich stromauf einer von der ersten Innenkante des Strömungskonditionieres begrenzten, dem Aufstauen von daran anströmendem Medium dienenden, in einem, insb. zirkulär umlaufenden, Randbereich des Strömungskonditionierers angeordneten Prallfläche P zusätzlich zum ersten Wirbel w1 ein im wesentlichen toroidaler, zumindest im stationären Zustand gleichermaßen weitgehend ortsfester zweiter Wirbel w2 aus, und zwar in der Weise, daß die größte gedachte Trägheitshauptachse jedes der beiden Wirbel w1, w2 zumindest in axialer Verlängerung miteinander im wesentlichen koinzidieren. Alternativ oder in Ergänzung dazu sind die beiden Wirbel w1, w2 in vorteilhafter Weise so ausgebildet, daß die größte gedachte Trägheitshauptachse jedes der beiden Wirbel w1, w2 jeweils mit der gedachten Längsachse des Strömungskonditionerers und/oder einer gedachten Längsachse des Meßrohrs im wesentlichen koinzidiert.

Die Prallfläche P ist dafür so im Strömungskonditionierer angeordnet und ausgerichtet, daß sie zumindest abschnittsweise im wesentlichen senkrecht zu einer gedachten Längsachse des Strömungskonditionierers und/oder daß sie abschnittsweise im wesentlichen senkrecht zu einer gedachten Längsachse des Meßrohrs verläuft. Da sich besonders gute Ergebnisse mit einer ausgeprägten Prallfläche erzielt werden können, weist diese nach einer vorteilhaften Ausgestaltung der Erfindung in radialer Richtung eine Höhe h2 auf, die wenigstens 1 mm beträgt. Die Prallfläche P kann beispielsweise als eine im wesentlichen planare Kreisringfläche oder auch konusförmig, sich zum Meßrohr hin verjüngend bzw. zur Prozeßleitung hin aufweiten ausgebildet sein.

Wie jeweils aus den Fig. 4, 5 und 6 ersichtlich, ist die wirbelerzeugende erste Innenkante K1 dadurch gebildet, daß die Prallfläche P auf eine sich in Richtung des Auslaßende des Strömungskonditionierers erstreckende, dem Stützen und Stabilisieren des ersten Wirbels w1 dienende erste Leitfläche LF1 stößt, die insoweit ebenfalls von der ersten Innenkante K1 begrenzt ist. Im hier gezeigten Ausführungsbeispiel ist die Prallfläche P und insoweit auch die erste Innenkante K1 dadurch auf einfache Weise gebildet ist, daß der Innendurchmesser des Einlaßendes des Strömungskonditionierers kleiner gehalten ist, als das Kaliber des Zulaufsegments der Prozeßleitung. Gemäß einer Ausgestaltung der Erfindung ist die erste Leitfläche LF1 so geformt, daß sie praktisch einer Mantelfläche eines Segments - hier etwa einem ½ oder einem 1/3 Segment - einer Toroidschale oder eines vergleichbaren Tonnenkörpers entspricht. Dies kann auf einfache Weise dadurch realisiert werden, indem die Leitfläche LF1 zumindest anteilig durch eine im Strömungskonditionierer eingeformte, insb. zirkuläre und/oder umlaufende, Rille oder Nut, wie etwa eine Ringnut, oder einen im Strömungskonditionierer eingeformten Innenkonus gebildet ist. Im besonderen ist die zwischen den beiden Innenkanten gebildete Leitffläche LF1 gemäß einer weiteren Ausgestaltung der Erfindung zumindest abschnittsweise bezüglich einer gedachten Längsachse des Strömungskonditionierers im wesentlichen streng konkav geformt.

In ihrem weiteren Verlauf stößt die erste Leitfläche LF1, wie jeweils in den Fig. 4, 5 und 6 schematisch dargestellt, schließlich unter Bildung der zweiten Innenkante K2 auf eine Führen von im Strömungskonditionierer strömendem Medium dienende zweite Leitfläche LF2 des Strömungskonditionierers. Die sich zum Meßrohr hin verjüngende zweite Leitfläche LF2 kann beispielsweise, wie auch in den Fig. 4 bis 6 gezeigt, im wesentlichen konisch geformt sein, insb. so, daß sie zumindest abschnittsweise eine konvex Konturlinie aufweist.

Beim erfindungsgemäßen Meßsystem sind die Innenkanten und die Leitflächen zudem im besonderen so ausgebildet und zueinander angeordnet, daß eine Innenwand des Strömungskonditionierers insgesamt effektiv eine weitgehend konvexe Kontur aufweist. Durch die gegebenenfalls vorgesehene Prallfläche wird das Ausmaß vorgenannter Konvexität der Kontur der Innenwand der Strömungskonditionierers noch stärker ausgeprägt.

Im Meßbetrieb wird beim erfindungsgemäßen Verfahren das zu messende Medium aus dem Zulaufsegment in den Strömungskonditionierer einströmengelassen. Dabei wird es aufgrund des geringeren Strömungsquerschnitts in Richtung der gedachten Längsachse des Strömungskonditionierers des Strömungskonditionierer beschleunigt. Beim Vorbeiströmen an der ersten Innenkante K1 wird zumindest der erste Wirbel w1 innerhalb des im Einlaßbereich des Strömungskonditionieres strömenden Medium gebildet, und zwar in der Weise, daß eine größte gedachte Trägheitshauptachse des Wirbels w1 mit der gedachten Längsachse des Strömungskonditionerers und/oder einer gedachten Längsachse des Meßrohrs im wesentlichen koinzidiert. Für das an Wirbel w1 vorbeiströmende Medium wirkt dieser sowohl weiter querschnittsverengend wie auch zur Leitfläche L hin vermittelnd und insoweit für das Strömungsprofil stabilisierend.

Der Wirbel w1 wird dabei durch die zwischen den beiden Innenkanten K1, K2 vorgesehene Leitfläche LF1 gestützt und im Zusammenspiel von selbiger Leitfläche LF1 und der zweiten Innenkante K2 in seiner maximalen axialen Ausdehnung begrenzt und insoweit in Gestalt und Größe weitgehend definiert. Infolgedessen können unkontrollierte, gleichsam unerwünschte Teilungen und/oder Ablösungen des Wirbels w1 vermieden werden.

Für den hier gezeigten Fall, daß wenigstens ein weiterer im wesentlichen stationären, insb. im wesentlichen ortsfesten, toroidalen Wirbel im Einlaßbereich des Strömungskonditionieres induziert wird, ergibt sich effektiv eine zusätzliche Querschnittsverengung und insoweit auch eine erhöht Beschleunigung der Strömung. Infolgedessen kann eine für die angestrebte Meßgenauigkeit des Meßsystem ausreichend hohe Reynoldszahl und damit einhergehend einen ausreichend hoher Turbulenzgrad erzielt werden, wodurch wiederum ein vorab gut abschätzbares und somit auch gut reproduzierbares Strömungsprofil im an den Strömungskonditionierer angeschlossenen Meßrohr eingestellt werden kann.

Weitere vorteilhafte Ausgestaltungen und besondere Ausführungen, insb. auch als vorteilhaft aufgefundene Dimensionierungen für die einzelnen Elemente des erfindungsgemäßen Strömungskonditionieres sind in nachfolgenden Tabellen 1, 2 und 3 wie auch in den nachstehenden Patentansprüchen aufgeführt, worin u.a. sind:
- A1 -: Strömungsquerschnitt des Meßrohrs,
- A2 -: Strömungsquerschnitts des Zulaufsegments der Prozeßleitung,
- A2/A1 -: Querschnittsverhältnis des Strömungsquerschnitts A2 des Zulaufsegments der Prozeßleitung zum Strömungsquerschnitt A1 des Meßrohrs,
- a -: von der ersten Innenkante K begrenzter Querschnitt des Lumens des Strömungskonditionierers,
- a/A1 -: Kontraktionsverhältnis des durch die erste Innenkante begrenzten Querschnitts a zum Strömungsquerschnitt A1 des Meßrohrs,
- A2/A1-a/A1 -: Differenz zwischen dem Querschnittsverhältnis A2/A1 und dem Kontraktionsverhältnis a/A1,
- a/A2 -: Einschnürungsverhältnis des durch die erste Innenkante K1 begrenzten Querschnitts a zum Strömungsquerschnitt A2 des Zulaufsegments der Prozeßleitung,
- A2/A1-a/A2 -: Differenz zwischen dem Querschnittsverhältnis A2/A1 und dem Einschnürungsverhältnis a/A2,
- c -: von der zweiten Innenkante K2 begrenzter Querschnitt des Lumens des Strömungskonditionierers,
- c/A1 -: Kontraktionsverhältnis des durch die zweite Innenkante K2 begrenzten Querschnitts c zum Strömungsquerschnitt A1 des Meßrohrs,
- A2/A1-c/A1 -: Differenz zwischen dem Querschnittsverhältnis A2/A1 und dem Kontraktionsverhältnis c/A1,
- c/A2 -: Einschnürungsverhältnis des durch die zweite Innenkante begrenzten Querschnitts c zum Strömungsquerschnitt A2 des Zulaufsegments der Prozeßleitung,
- A2/A1-c/A2 -: Differenz zwischen dem Querschnittsverhältnis A2/A1 und dem Einschnürungsverhältnis c/A2,
- D1 -: Kaliber des Meßrohrs,
- D2 -: Kaliber des Zulaufsegments der einlaßseitig an das Meßsystem angeschlossen Prozeßleitung,
- D2/D1 -: Kaliberverhältnis des Kaliber D2 des Zulaufsegments der Prozeßleitung zum Kaliber D1 des Meßrohrs,
- d -: Durchmesser des durch die Innenkante K begrenzten Querschnitts des Lumens des Strömungskonditionierers,
- L1 -: Einbaulänge des Meßrohrs,
- L2 -: Einbaulänge des Strömungskonditionierers,
- Lm -: Abstand des Sensorelements vom Einlaßende des Meßrohrs,
- α -: Flankenwinkel eines die Prallfläche des Strömungskonditionieres bildenden Innenkonus (α = 90° - α_{⊥}),
- β -: Flankenwinkel eines die Leitfläche des Strömungskonditionieres bildenden Innenkonus.

Im übrigen wird hinsichtlich vorteilhafter Ausgestaltungen und Weiterbildungen des Strömungskonditionierers, insb. auch in Relation zum Meßrohrs, sowie geeigneter Dimensionierungen und Verwendungen des Meßsystems insgesamt ferner auch auf die Offenbarung der eigenen, nicht vorveröffentlichten internationalen Patentanmeldungen PCT/EP2007/057467 und PCT/EP2007/057468 verwiesen, deren Inhalt insoweit als die Offenbarung der vorliegenden Anmeldung ergänzend angesehen wird.

**Tabelle 1:**

| D1 | | D2/D1 | d/D1 | D2/d | A2/A1 | a/A1 | a/A2 | (A2-a)/A1 | (a-A1)/A2 | (A2-a)/a | (a-A1)/A1 |
|---|---|---|---|---|---|---|---|---|---|---|---|
| 15 | min | 1.75 | 1.58 | 1.10 | 3.06 | 2.51 | 0.26 | 0.55 | 0.16 | 0.22 | 1.51 |
| 15 | max | 3.10 | 1.58 | 1.96 | 9.61 | 2.51 | 0.82 | 7.11 | 0.49 | 2.84 | 1.51 |
| 25 | min | 1.57 | 1.23 | 1.27 | 2.46 | 1.52 | 0.30 | 0.93 | 0.10 | 0.61 | 0.52 |
| 25 | max | 2.24 | 1.23 | 1.82 | 5.03 | 1.52 | 0.62 | 3.51 | 0.21 | 2.30 | 0.52 |
| 40 | min | 1.29 | 1.18 | 1.09 | 1.67 | 1.40 | 0.30 | 0.27 | 0.08 | 0.20 | 0.40 |
| 40 | max | 2.17 | 1.18 | 1.83 | 4.69 | 1.40 | 0.84 | 3.29 | 0.24 | 2.36 | 0.40 |
| 50 | min | 1.50 | 1.15 | 1.30 | 2.24 | 1.32 | 0.28 | 0.93 | 0.07 | 0.70 | 0.32 |
| 50 | max | 2.18 | 1.15 | 1.90 | 4.74 | 1.32 | 0.59 | 3.42 | 0.14 | 2.59 | 0.32 |
| 80 | min | 1.32 | 1.18 | 1.11 | 1.73 | 1.39 | 0.30 | 0.34 | 0.08 | 0.24 | 0.39 |
| 80 | max | 2.16 | 1.18 | 1.83 | 4.67 | 1.39 | 0.80 | 3.28 | 0.23 | 2.35 | 0.39 |
| 100 | min | 1.51 | 1.15 | 1.31 | 2.27 | 1.33 | 0.29 | 0.94 | 0.07 | 0.71 | 0.33 |
| 100 | max | 2.14 | 1.15 | 1.85 | 4.57 | 1.33 | 0.59 | 3.23 | 0.15 | 2.43 | 0.33 |
| 150 | min | 1.41 | 1.39 | 1.02 | 1.99 | 1.92 | 0.61 | 0.07 | 0.29 | 0.04 | 0.92 |
| 150 | max | 1.78 | 1.39 | 1.28 | 3.17 | 1.92 | 0.96 | 1.25 | 0.46 | 0.65 | 0.92 |
| 200 | min | 1.32 | 1.15 | 1.02 | 1.73 | 1.33 | 0.29 | 0.07 | 0.07 | 0.04 | 0.33 |
| 200 | max | 2.16 | 1.39 | 1.85 | 4.67 | 1.92 | 0.96 | 3.28 | 0.46 | 2.43 | 0.92 |
| 250 | min | 1.32 | 1.15 | 1.02 | 1.73 | 1.33 | 0.29 | 0.07 | 0.07 | 0.04 | 0.33 |
| 250 | max | 2.16 | 1.39 | 1.85 | 4.67 | 1.92 | 0.96 | 3.28 | 0.46 | 2.43 | 0.92 |
| 300 | min | 1.32 | 1.15 | 1.02 | 1.73 | 1.33 | 0.29 | 0.07 | 0.07 | 0.04 | 0.33 |
| 300 | max | 2.16 | 1.39 | 1.85 | 4.67 | 1.92 | 0.96 | 3.28 | 0.46 | 2.43 | 0.92 |
| 350 | min | 1.32 | 1.15 | 1.02 | 1.73 | 1.33 | 0.29 | 0.07 | 0.07 | 0.04 | 0.33 |
| 350 | max | 2.16 | 1.39 | 1.85 | 4.67 | 1.92 | 0.96 | 3.28 | 0.46 | 2.43 | 0.92 |
| 400 | min | 1.32 | 1.15 | 1.02 | 1.73 | 1.33 | 0.29 | 0.07 | 0.07 | 0.04 | 0.33 |
| 400 | max | 2.16 | 1.39 | 1.85 | 4.67 | 1.92 | 0.96 | 3.28 | 0.46 | 2.43 | 0.92 |
| 500 | min | 1.32 | 1.15 | 1.02 | 1.73 | 1.33 | 0.29 | 0.07 | 0.07 | 0.04 | 0.33 |
| 500 | max | 2.16 | 1.39 | 1.85 | 4.67 | 1.92 | 0.96 | 3.28 | 0.46 | 2.43 | 0.92 |
| 600 | min | 1.32 | 1.15 | 1.02 | 1.73 | 1.33 | 0.29 | 0.07 | 0.07 | 0.04 | 0.33 |
| 600 | max | 2.16 | 1.39 | 1.85 | 4.67 | 1.92 | 0.96 | 3.28 | 0.46 | 2.43 | 0.92 |

**Tabelle 2:**

| D1 | | (A2/A1)-(a/A1) | (A2/A1)-(a/A2) | (D2-d)/D1 | (d-D1)/D2 | (D2-d)/d | (d-D1)//D1 | (D2/D1)-(d/D2) | L1/D2 | L1/D1 | L2/D2 | L2/D1 |
|---|---|---|---|---|---|---|---|---|---|---|---|---|
| 15 | min | 0.55 | 2.24 | 0.17 | 0.19 | 0.10 | 0.58 | 0.84 | 3.75 | 11.62 | 0.89 | 2.77 |
| 15 | max | 7.11 | 9.35 | 1.52 | 0.33 | 0.96 | 0.58 | 2.59 | 6.64 | 11.62 | 1.59 | 2.77 |
| 25 | min | 0.93 | 1.84 | 0.33 | 0.10 | 0.27 | 0.23 | 0.78 | 3.17 | 7.11 | 0.50 | 1.12 |
| 25 | max | 3.51 | 4.73 | 1.01 | 0.15 | 0.82 | 0.23 | 1.69 | 4.54 | 7.11 | 0.71 | 1.12 |
| 40 | min | 0.27 | 0.83 | 0.11 | 0.08 | 0.09 | 0.18 | 0.38 | 2.03 | 4.39 | 0.40 | 0.86 |
| 40 | max | 3.29 | 4.39 | 0.98 | 0.14 | 0.83 | 0.18 | 1.62 | 3.40 | 4.39 | 0.67 | 0.86 |
| 50 | min | 0.93 | 1.66 | 0.35 | 0.07 | 0.30 | 0.15 | 0.73 | 2.00 | 3.36 | 0.32 | 0.71 |
| 50 | max | 3.42 | 4.46 | 1.03 | 0.10 | 0.90 | 0.15 | 1.65 | 2.24 | 4.38 | 0.47 | 0.71 |
| 80 | min | 0.34 | 0.93 | 0.14 | 0.08 | 0.11 | 0.18 | 0.42 | 1.49 | 2.53 | 0.40 | 0.86 |
| 80 | max | 3.28 | 4.37 | 0.98 | 0.14 | 0.83 | 0.18 | 1.62 | 1.93 | 3.21 | 0.65 | 0.86 |
| 100 | min | 0.94 | 1.69 | 0.35 | 0.07 | 0.31 | 0.15 | 0.74 | 1.10 | 2.36 | 0.34 | 0.74 |
| 100 | max | 3.23 | 4.28 | 0.98 | 0.10 | 0.85 | 0.15 | 1.60 | 1.56 | 2.36 | 0.49 | 0.74 |
| 150 | min | 0.07 | 1.03 | 0.03 | 0.22 | 0.02 | 0.39 | 0.43 | 0.15 | 0.22 | 1.03 | 1.83 |
| 150 | max | 1.25 | 2.56 | 0.39 | 0.27 | 0.28 | 0.39 | 1.00 | 0.45 | 0.76 | 1.30 | 1.83 |
| 200 | min | 0.07 | 0.93 | 0.03 | 0.07 | 0.02 | 0.15 | 0.42 | 0.15 | 0.22 | 0.34 | 0.74 |
| 200 | max | 3.28 | 4.37 | 0.98 | 0.27 | 0.85 | 0.39 | 1.62 | 1.93 | 3.21 | 1.30 | 1.83 |
| 250 | min | 0.07 | 0.93 | 0.03 | 0.07 | 0.02 | 0.15 | 0.42 | 0.15 | 0.22 | 0.34 | 0.74 |
| 250 | max | 3.28 | 4.37 | 0.98 | 0.27 | 0.85 | 0.39 | 1.62 | 1.93 | 3.21 | 1.30 | 1.83 |
| 300 | min | 0.07 | 0.93 | 0.03 | 0.07 | 0.02 | 0.15 | 0.42 | 0.15 | 0.22 | 0.34 | 0.74 |
| 300 | max | 3.28 | 4.37 | 0.98 | 0.27 | 0.85 | 0.39 | 1.62 | 1.93 | 3.21 | 1.30 | 1.83 |
| 350 | min | 0.07 | 0.93 | 0.03 | 0.07 | 0.02 | 0.15 | 0.42 | 0.15 | 0.22 | 0.34 | 0.74 |
| 350 | max | 3.28 | 4.37 | 0.98 | 0.27 | 0.85 | 0.39 | 1.62 | 1.93 | 3.21 | 1.30 | 1.83 |
| 400 | min | 0.07 | 0.93 | 0.03 | 0.07 | 0.02 | 0.15 | 0.42 | 0.15 | 0.22 | 0.34 | 0.74 |
| 400 | max | 3.28 | 4.37 | 0.98 | 0.27 | 0.85 | 0.39 | 1.62 | 1.93 | 3.21 | 1.30 | 1.83 |
| 500 | min | 0.07 | 0.93 | 0.03 | 0.07 | 0.02 | 0.15 | 0.42 | 0.15 | 0.22 | 0.34 | 0.74 |
| 500 | max | 3.28 | 4.37 | 0.98 | 0.27 | 0.85 | 0.39 | 1.62 | 1.93 | 3.21 | 1.30 | 1.83 |
| 600 | min | 0.07 | 0.93 | 0.03 | 0.07 | 0.02 | 0.15 | 0.42 | 0.15 | 0.22 | 0.34 | 0.74 |
| 600 | max | 3.28 | 4.37 | 0.98 | 0.27 | 0.85 | 0.39 | 1.62 | 1.93 | 3.21 | 1.30 | 1.83 |

**Tabelle 3:**

| D1 | | (c/A1) | (c/A2) | (A2/A1)-(c/A2) | (A2/A1)-(c/A2) |
|---|---|---|---|---|---|
| 15 | min | 1.68 | 0.17 | 2.38 | 0.99 |
| 15 | max | 2.07 | 0.68 | 9.44 | 7.94 |
| 25 | min | 0.98 | 0.19 | 1.99 | 1.31 |
| 25 | max | 1.14 | 0.47 | 4.84 | 4.05 |
| 40 | min | 0.94 | 0.20 | 0.97 | 0.51 |
| 40 | max | 1.16 | 0.69 | 1.19 | 3.75 |
| 50 | min | 0.89 | 0.19 | 1.81 | 1.27 |
| 50 | max | 0.97 | 0.43 | 4.55 | 3.85 |
| 80 | min | 0.93 | 0.20 | 1.10 | 0.64 |
| 80 | max | 1.09 | 0.63 | 4.47 | 3.74 |
| 100 | min | 0.90 | 0.20 | 1.83 | 1.25 |
| 100 | max | 1.02 | 0.45 | 4.37 | 3.67 |
| 150 | min | 1.56 | 0.49 | 1.21 | 0.43 |
| 150 | max | 1.56 | 0.78 | 2.68 | 1.61 |
| 200 | min | 0.90 | 0.20 | 1.10 | 0.43 |
| 200 | max | 1.56 | 0.78 | 4.47 | 3.74 |
| 250 | min | 0.90 | 0.20 | 1.10 | 0.43 |
| 250 | max | 1.56 | 0.78 | 4.47 | 3.74 |
| 300 | min | 0.90 | 0.20 | 1.10 | 0.43 |
| 300 | max | 1.56 | 0.78 | 4.47 | 3.74 |
| 350 | min | 0.90 | 0.20 | 1.10 | 0.43 |
| 350 | max | 1.56 | 0.78 | 4.47 | 3.74 |
| 400 | min | 0.90 | 0.20 | 1.10 | 0.43 |
| 400 | max | 1.56 | 0.78 | 4.47 | 3.74 |
| 500 | min | 0.90 | 0.20 | 1.10 | 0.43 |
| 500 | max | 1.56 | 0.78 | 4.47 | 3.74 |
| 600 | min | 0.90 | 0.20 | 1.10 | 0.43 |
| 600 | max | 1.56 | 0.78 | 4.47 | 3.74 |

## Patentansprüche

1. In den Verlauf einer Prozeßleitung, insb. einer Rohrleitung, eingesetztes Meßsystem zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in der Prozeßleitung strömenden Mediums, welches Meßsystem umfaßt:
- einen Meßaufnehmer
-- mit einem dem Führen von zu messendem Medium dienenden, insb. im wesentlichen gerades, Meßrohr, das einen kleineren Strömungsquerschnitt (A1) aufweist, als ein einlaßseitig an das Meßsystem angeschlossenes Zulaufsegment der Prozeßleitung, und
-- mit einer Sensoranordnung,
--- die wenigstens ein primär auf die zu erfassende Meßgröße, insb. auch Änderungen derselben, reagierendes Sensorelement (3) aufweist, und
--- die mittels des wenigstens einen Sensorelements wenigstens ein von der Meßgröße beeinflußtes Meßsignal liefert,
- eine mit dem Meßaufnehmer kommunizierende Meßelektronik, die unter Verwendung des wenigstens einen Meßsignals zumindest zeitweise wenigstens einen die Meßgröße momentan repräsentierenden Meßwert, insb. einen Massendurchfluß-Meßwert, Volumendurchfluß-Meßwert, einen Dichte-Meßwert, einen Viskositäts-Meßwert, einen Druck-Meßwert, einen Temperatur-Meßwert, erzeugt, sowie
- einen einlaßseitig des Meßrohrs angeordneten, zwischen diesem und dem Zulaufsegment der Prozeßleitung vermittelnden Strömungskonditionierer, der ein sich zum Meßrohr hin verjüngendes, im Betrieb vom Medium durchströmtes Lumen aufweist,
- wobei ein dem Zulaufsegment der Prozeßleitung zugewandtes Einlaßende des Strömungskonditionierers einen Strömungsquerschnitt (a) aufweist, der größer als der Strömungsquerschnitt (A1) des Meßrohrs ist, und ein dem Meßrohr zugewandtes Auslaßende des Strömungskonditionierers einen Strömungsquerschnitt (b) aufweist, der kleiner als der Strömungsquerschnitt des Einlaßendes des Strömungskonditionierers ist, und
- wobei der Strömungskonditionierer wenigstens eine stromaufwärts von dessen Auslaßende angeordnete, in das Lumen des Strömungskonditionierers hineinragende, zirkuläre erste Innenkante (K1) sowie wenigstens eine stromabwärts von der ersten Innenkante (K1) angeordnete, gleichfalls in das Lumen des Strömungskonditionierers hineinragende zirkuläre zweite Innenkante (K2) aufweist, von welchen zwei Innenkanten (K1, K2) jede im Betrieb von innerhalb des Strömungskonditionierers geführtem Medium angeströmt ist,
- wobei sich zwischen der in das Lumen des Strömungskonditionierers hineinragenden ersten Innenkante (K1) und der in das Lumen des Strömungskonditionierers hineinragenden zweiten Innenkante (K2) eine zumindest abschnittsweise bezüglich einer gedachten Längsachse des Strömungskonditionierers im wesentlichen streng konkav geformte erste Leitfläche (LF1) des Strömungskonditionierers erstreckt, und
- wobei die in das Lumen des Strömungskonditionierers hineinragende zweite Innenkante eine dem Führen von im Strömungskonditionierer strömendem Medium dienende, sich in Richtung des Auslaßendes des Strömungskonditionierers erstreckende, insb. im wesentlichen konvexe, zweite Leitfläche (LF2) des Strömungskonditionieres begrenzt.

2. Meßsystem nach Anspruch 1,
- wobei ein Querschnittsverhältnis (A2/A1) des Strömungsquerschnitts (A2) des Zulaufsegments der Prozeßleitung zum Strömungsquerschnitt (A1) des Meßrohrs größer als 1.5 und/oder kleiner als 10, insb. in einem Bereich zwischen 1.66 und 9.6, gehalten ist,
- wobei ein Einschnürungsverhältnis (a/A2) eines durch die erste Innenkante begrenzten Querschnitts (a) zum Strömungsquerschnitt (A2) des Zulaufsegments der Prozeßleitung kleiner als 0.9 und/oder größer als 0.1, insb. in einem Bereich zwischen 0.25 und 0.85, gehalten ist, und
- wobei eine Differenz (A2/A1-a/A2) zwischen dem Querschnittsverhältnis (A2/A1) und dem Einschnürungsverhältnis (a/A2) größer als 0.5 und/oder kleiner als 10, insb. größer als 0.83 und kleiner als 9.5, gehalten ist.

3. Meßsystem nach einem der vorherigen Ansprüche,
- wobei ein Kontraktionsverhältnis (c/A1) eines durch die zweite Innenkante (K2) begrenzten Querschnitts (c) des Lumens des Strömungskonditionierers zum Strömungsquerschnitt (A1) des Meßrohrs größer als 0.9 und/oder kleiner als 5, insb. in einem Bereich zwischen 0.9 und 2.5 gehalten ist, und
- wobei eine Differenz (A2/A1-c/A1) zwischen einem Querschnittsverhältnis (A2/A1) des Strömungsquerschnitts (A2) des Zulaufsegments der Prozeßleitung zum Strömungsquerschnitt (A1) des Meßrohrs und dem Kontraktionsverhältnis (c/A1) größer als 0.2 und/oder kleiner als 10, insb. größer als 0.4 und kleiner als 8, gehalten ist.

4. Meßsystem nach einem der vorherigen Ansprüche,
- wobei ein Kontraktionsverhältnis (a/A1) eines durch die erste Innenkante begrenzten Querschnitts (a) zum Strömungsquerschnitt (A1) des Meßrohrs größer als 1.2 und/oder kleiner als 5, insb. in einem Bereich zwischen 1.3 und 3, gehalten ist,
- wobei ein Querschnittsverhältnis (A2/A1) des Strömungsquerschnitts (A2) des Zulaufsegments der Prozeßleitung zum Strömungsquerschnitt (A1) des Meßrohrs größer als 1.5 und/oder kleiner als 10, insb. in einem Bereich zwischen 1.66 und 9.6, gehalten ist, und
- wobei eine Differenz (A2/A1-a/A1) zwischen dem Querschnittsverhältnis (A2/A1) und dem Kontraktionsverhältnis (a/A1) größer als 0.2 und/oder kleiner als 10, insb. größer als 0.25 und kleiner als 8, gehalten ist.

5. Meßsystem nach einem der vorherigen Ansprüche, wobei das Meßrohr ein kleineres Kaliber (D1) aufweist, als ein einlaßseitig an das Meßsystem angeschlossenes Zulaufsegment der Prozeßleitung, insb. derart,
- daß das dem Zulaufsegment der Prozeßleitung zugewandte Einlaßende des Strömungskonditionierers ein Kaliber aufweist, das größer als ein Kaliber (D1) des Meßrohrs ist, und das dem Meßrohr zugewandte Auslaßende des Strömungskonditionierers ein Kaliber aufweist, das kleiner als das Kaliber des Einlaßendes des Strömungskonditionierers ist; und/oder
- daß die in das Lumen des Strömungskonditionierers hineinragende erste Innenkante dadurch gebildet ist, daß der Innendurchmesser des Einlaßendes (d) des Strömungskonditionierers kleiner gehalten ist, als das Kaliber (D2) des Zulaufsegments der Prozeßleitung; und/oder
- daß ein von der in das Lumen des Strömungskonditionierers hineinragenden erste Innenkante begrenzter Querschnitt des Lumens des Strömungskonditionierers einen Durchmesser (d) aufweist, der kleiner ist als das Kaliber (D2) des Zulaufsegments der Prozeßleitung; und/oder
- daß ein Kaliberverhältnis (D2/D1) des Kaliber (D2) des Zulaufsegments der Prozeßleitung zum Kaliber (D1) des Meßrohrs größer als 1.1 und/oder kleiner als 5 , insb. in einem Bereich zwischen 1.2 und 3.1, gehalten ist.

6. Meßsystem nach einem der vorherigen Ansprüche,
- wobei das Meßrohr eine Einbaulänge (L1) aufweist, die größer als eine Einbaulänge (L2) des Strömungskonditionierers ist, so daß ein Einbaulängenverhältnis (L2/L1) der Einbaulänge (L2) des Strömungskonditionierers zur Einbaulänge (L1) des Meßrohrs kleiner als eins gehalten ist,
- wobei das Meßrohr ein kleineres Kaliber (D1) aufweist, als ein einlaßseitig an das Meßsystem angeschlossenes Zulaufsegment der Prozeßleitung, und
- wobei ein Kaliberverhältnis (D2/D1) des Kaliber (D2) des Zulaufsegments der Prozeßleitung zum Kaliber (D1) des Meßrohrs mindest 10% des Einbaulängenverhältnisse (L2/L1) der Einbaulänge (L2) des Strömungskonditionierers zur Einbaulänge (L1) des Meßrohrs entspricht.

7. Meßsystem nach einem der vorherigen Ansprüche,
- wobei das wenigstens eine, insb. im Betrieb in das Medium eintauchende, Sensorelement in einem Abstand (Lm) vom Einlaßende des Meßrohrs entfernt im und/oder, insb. unmittelbar, am Meßrohr angeordnet ist,
- wobei das Meßrohr ein kleineres Kaliber (D1) aufweist, als ein einlaßseitig an das Meßsystem angeschlossenes Zulaufsegment der Prozeßleitung, und
- wobei das wenigstens eine Sensorelement so plaziert ist, daß ein Verhältnis des Abstands (Lm) zum Kaliber (D1) des Meßrohrs größer als eins gehalten ist.

8. Meßsystem nach einem der vorherigen Ansprüche, wobei die in das Lumen des Strömungskonditionierers hineinragende erste Innenkante eine dem Aufstauen von daran anströmendem Medium dienende, in einem, insb. zirkulär umlaufenden, Randbereich des Strömungskonditionierers angeordnete Prallfläche des Strömungskonditionieres begrenzt.

9. Meßsystem nach dem vorherigen Anspruch,
- wobei die Prallfläche so im Strömungskonditionierer angeordnet und ausgerichtet ist, daß sie zumindest abschnittsweise im wesentlichen senkrecht zu einer gedachten Längsachse des Strömungskonditionierers und/oder daß sie abschnittsweise im wesentlichen senkrecht zu einer gedachten Längsachse des Meßrohrs verläuft; und/oder
- wobei die Prallfläche in radialer Richtung eine Höhe aufweist, die wenigstens 1 mm beträgt; und/oder
- wobei die Prallfläche als eine Kreisringfläche ausgebildet ist; und/oder
- wobei die Prallfläche und die erste Innenkante zumindest anteilig durch eine einlaßseitig im Strömungskonditionierer eingeformte, insb. zirkuläre und/oder in sich geschlossene, Schulter gebildet sind; und/oder
- wobei die Prallfläche zumindest abschnittsweise im wesentlichen planar ausgebildet ist; und/oder
- wobei die Prallfläche so im Strömungskonditionierer angeordnet und ausgerichtet ist, daß sie abschnittsweise im wesentlichen koplanar zu einem Querschnitt des Strömungskonditionierers und/oder daß sie abschnittsweise im wesentlichen koplanar zu einem Querschnitt des Meßrohrs ist.

10. Meßsystem nach Anspruch 8,
- wobei die Prallfläche zumindest abschnittsweise im wesentlichen konusförmig ausgebildet ist; und/oder
- wobei die Prallfläche sich zum Meßrohr hin verjüngend ausgebildet ist; und/oder
- wobei die Prallfläche sich zum Einlaßende des Strömungskonditionieres hin aufweitend ausgebildet ist.

11. Meßsystem nach Anspruch 8 oder dem vorherigen Anspruch, wobei die Prallfläche und die erste Innenkante zumindest anteilig durch einen einlaßseitig im Strömungskonditionierer eingeformten, insb. sich zu dessen Einlaßende hin erstreckenden, sich zum Meßrohr hin verjüngenden Innenkonus gebildet sind, insb. derart,
- daß der die Prallfläche des Strömungskonditionieres bildende Innenkonus einen Flankenwinkel (α) aufweist, der größer als 45° ist; und/oder
- daß der die Prallfläche des Strömungskonditionieres bildende Innenkonus einen Flankenwinkel (α) aufweist, der kleiner als 90° ist; und/oder
- daß der die Prallfläche des Strömungskonditionieres bildende Innenkonus einen Flankenwinkel (α) aufweist, der größer als 60° und kleiner als 88° ist.

12. Meßsystem nach einem der vorherigen Ansprüche,
- wobei die zweite Leitfläche und die zweite Innenkante zumindest anteilig durch einen einlaßseitig im Strömungskonditionierer eingeformten, insb. sich zu dessen Auslaßende hin erstreckenden, Innenkonus gebildet sind, und
- wobei der die zweite Leitfläche des Strömungskonditionieres bildende Innenkonus einen Flankenwinkel (β) aufweist, der größer als 2°, insb. größer als 4°, und/oder kleiner als 45°, insb. kleiner als 10°, ist.

13. Meßsystem nach Anspruch 11 und 12, wobei die Prallfläche durch einen einlaßseitig im Strömungskonditionierer eingeformten, sich in Richtung von dessen Einlaßende erstreckenden ersten Innenkonus und die zweite Leitfläche durch einen einlaßseitig im Strömungskonditionierer eingeformten, sich in Richtung von dessen Auslaßende erstreckenden zweiten Innenkonus gebildet sind, insb. derart, daß der die Prallfläche bildende erste Innenkonus einen Flankenwinkel aufweist, der größer ist als ein Flankenwinkel des die zweite Leitfläche bildenden zweiten Innenkonus.

14. Meßsystem nach dem vorherigen Anspruch,
- wobei der die Prallfläche des Strömungskonditionieres bildende erste Innenkonus einen Flankenwinkel (α) aufweist, der größer als 45°, insb. größer als 60°, und der kleiner als 90°, insb. kleiner als 88°, ist, und
- wobei der die zweite Leitfläche des Strömungskonditionieres bildende zweite Innenkonus einen Flankenwinkel (β) aufweist, der größer als 2°, insb. größer als 4°, und der kleiner als 45°, insb. kleiner als 10°, ist.

15. Meßsystem nach einem der vorherigen Ansprüche, wobei der, insb. als Wirbel-Durchflußaufnehmer ausgebildete, Meßaufnehmer wenigstens einen im Meßrohr angeordneten Staukörper umfaßt, insb. derart, daß das wenigstens eine Sensorelement der Sensoranordnung stromabwärts des wenigstens einen Staukörpers angeordnet ist und/oder zumindest anteilig in das Meßrohr hineinragt.

16. Meßsystem nach einem der Ansprüche 1 bis 14, wobei es sich bei dem Meßaufnehmer um einen der folgenden handelt: einen Wirbel-Durchflußaufnehmer, insb. einen Wirbelstraßen-Durchflußaufnehmer, einen magnetisch-induktiven Durchflußaufnehmer; einen Durchflußaufnehmer vom Vibrationstyp, insb. um eine Coriolis-Massedurchflußaufnehmer, einen Dichteaufnehmer, und/oder einen Viskositätsaufnehmer; oder einen Ultraschall-Durchflußaufnehmer.

17. Meßsystem nach einem der vorherigen Ansprüche,
- wobei ein Querschnittsverhältnis (A2/A1) des Strömungsquerschnitts (A2) des Zulaufsegments der Prozeßleitung zum Strömungsquerschnitt (A1) des Meßrohrs größer als 1.5 und/oder kleiner als 10, insb. in einem Bereich zwischen 1.66 und 9.6, gehalten ist; und/oder
- wobei ein Einschnürungsverhältnis (a/A2) eines durch die erste Innenkante begrenzten Querschnitts (a) zum Strömungsquerschnitt (A2) des Zulaufsegments der Prozeßleitung kleiner als 0.9 und/oder größer als 0.1, insb. in einem Bereich zwischen 0.25 und 0.85, gehalten ist; und/oder
- wobei ein Kontraktionsverhältnis (c/A1) eines durch die zweite Innenkante (K2) begrenzten Querschnitts (c) des Lumens des Strömungskonditionierers zum Strömungsquerschnitt (A1) des Meßrohrs größer als 0.9 und/oder kleiner als 5, insb. in einem Bereich zwischen 0.9 und 2.5 gehalten ist; und/oder
- wobei ein Kontraktionsverhältnis (a/A1) eines durch die erste Innenkante begrenzten Querschnitts (a) zum Strömungsquerschnitt (A1) des Meßrohrs größer als 1.2 und/oder kleiner als 5, insb. in einem Bereich zwischen 1.3 und 3, gehalten ist; und/oder
- wobei das Meßrohr eine Einbaulänge (L1) aufweist, die größer als eine Einbaulänge (L2) des Strömungskonditionierers ist, so daß ein Einbaulängenverhältnis (L2/L1) der Einbaulänge (L2) des Strömungskonditionierers zur Einbaulänge (L1) des Meßrohrs kleiner als eins gehalten ist; und/oder
- wobei das wenigstens eine, insb. im Betrieb in das Medium eintauchende, Sensorelement in einem Abstand (Lm) vom Einlaßende des Meßrohrs entfernt im und/oder, insb. unmittelbar, am Meßrohr angeordnet ist; und/oder
- wobei die zweite Leitfläche und die zweite Innenkante zumindest anteilig durch einen einlaßseitig im Strömungskonditionierer eingeformten, insb. sich zu dessen Auslaßende hin erstreckenden, Innenkonus gebildet sind; und/oder
- wobei ein von der in das Lumen des Strömungskonditionierers hineinragenden ersten Innenkante begrenzter Querschnitt (a) des Lumens des Strömungskonditionierers größer ist als ein von der in das Lumen des Strömungskonditionierers hineinragenden zweiten Innenkante begrenzter Querschnitt (c) des Lumens des Strömungskonditionierers; und/oder wobei ein von der in das Lumen des Strömungskonditionierers hineinragenden zweiten Innenkante (K2) begrenzter Querschnitt (c) des Lumens des Strömungskonditionierers kleiner als der Strömungsquerschnitt (A2) des Zulaufsegments der Prozeßleitung, insb. kleiner als der Strömungsquerschnitt des Einlaßendes des Strömungskonditionierers, ist; und/oder
- wobei ein Einschnürungsverhältnis (c/A2) eines durch die zweite Innenkante (K2) begrenzten Querschnitts (c) des Lumens des Strömungskonditionierers zum Strömungsquerschnitt (A2) des Zulaufsegments der Prozeßleitung kleiner als 0.9 und/oder größer als 0.1, insb. in einem Bereich zwischen 0.19 und 0.78, gehalten ist; und/oder
- wobei jede der in das Lumen des Strömungskonditionierers hineinragenden Innenkanten so ausgebildet und im Strömungskonditionierer angeordnete ist, daß sie im wesentlichen quer zu einer gedachten Längsachse des Strömungskonditionierers und/oder quer zu einer gedachten Längsachse des Meßrohrs ausgerichtet ist; und/oder
- wobei jede der in das Lumen des Strömungskonditionierers hineinragenden Innenkanten, insb. zirkulär, umlaufend und insoweit in sich geschlossen ausgebildet ist; und/oder
- wobei jede der in das Lumen des Strömungskonditionierers hineinragenden Innenkanten einen Kantenradius aufweist, der kleiner als 2 mm, insb. kleiner 0,6 mm, ist; und/oder
- wobei ein von der zweiten in das Lumen des Strömungskonditionierers hineinragenden Innenkante begrenzter Querschnitt (a) des Lumens des Strömungskonditionierers, insb. auch ein von der ersten einen in das Lumen des Strömungskonditionierers hineinragenden Innenkante begrenzter Querschnitt (a) des Lumens des Strömungskonditionierers, kleiner ist als der Strömungsquerschnitt (A2) des Zulaufsegments der Prozeßleitung; und/oder
- wobei die in das Lumen des Strömungskonditionierers hineinragende erste Innenkante in der, insb. unmittelbaren, Nähe des Einlaßendes des Strömungskonditionierers angeordnet ist; und/oder
- wobei die in das Lumen des Strömungskonditionierers hineinragende erste Innenkante unmittelbar am Einlaßende des Strömungskonditionierers angeordnet ist; und/oder
- wobei der Strömunsgkonditionierer zumindest in einem Einlaßbereich im wesentlichen kreiszylindrisch geformt ist; und/oder
- wobei das Meßrohr zumindest in einem Einlaßbereich im wesentlichen kreiszylindrisch geformt ist; und/oder
- wobei der Strömunsgkonditionierer zumindest in einem Auslaßbereich im wesentlichen kreiszylindrisch geformt ist; und/oder
- wobei das, insb. kreiszylindrische, Meßrohr im wesentlichen gerade ist; und/oder
- wobei die erste Leitfläche zumindest anteilig durch eine im Strömungskonditionierer eingeformte, insb. zirkuläre und/oder umlaufende, Rille oder Nut gebildet ist; und/oder
- wobei die erste Leitfläche durch eine im Strömungskonditionierer eingeformte Ringnut gebildet ist; und/oder
- wobei die erste Leitfläche durch einen im Strömungskonditionierer eingeformten Innenkonus gebildet ist; und/oder
- wobei die erste Leitfläche (L2) bezüglich einer gedachten Längsachse des Strömungskonditionierers, insb. überwiegend oder gänzlich, konkav geformt ist; und/oder
- wobei die, insb. konisch ausgebildete, zweite Leitfläche des Strömungskonditionieres zumindest abschnittsweise bezüglich einer gedachten Längsachse des Strömungskonditionierers konvex geformt ist; und/oder
- wobei die, insb. konisch ausgebildete, zweite Leitfläche des Strömungskonditionieres zumindest abschnittsweise konkav geformt ist; und/oder
- wobei die zweite Leitfläche des Strömungskonditionieres sich zum Meßrohr hin verjüngend ausgebildet ist; und/oder
- wobei die zweite Leitfläche des Strömungskonditionieres im wesentlichen konisch geformt ist; und/oder
wobei das wenigstens eine Sensorelement mittels wenigstens eines piezoelektrischen und/oder mittels wenigstens eines piezoresistiven Elements gebildet ist; und/oder
- wobei das wenigstens eine Sensorelement mittels wenigstens einer mit einem Anker korrespondierenden Tauchspule gebildet ist; und/oder
- wobei das wenigstens eine Sensorelement mittels wenigstens einer im Meßrohr strömendes Medium berührenden, elektrische Potentiale abgreifenden Meßelektrode gebildet ist; und/oder
- wobei das wenigstens eine Sensorelement mittels wenigstens eines auf Veränderungen der Meßgröße reagierenden Meßkondensators gebildet ist; und/oder
- wobei das wenigstens eine Sensorelement mittels wenigstens eines elektrischen Widerstandes gebildet ist; und/oder
- wobei das wenigstens Sensorelement im Betrieb unter Einwirkung des im Meßrohr strömenden Mediums wiederholt mechanischen Verformungen unterworfen ist; und/oder
- wobei das wenigstens Sensorelement im Betrieb unter Einwirkung des im Meßrohr strömenden Mediums wiederholt relativ zu einer statischen Ruhelage bewegt ist.

18. Verfahren zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in einer Prozeßleitung strömenden Mediums mittels eines in den Verlauf der Prozeßleitung eingesetzten Meßsystems, das einen an ein Zulaufsegment der Prozeßleitung angeschlossenen Strömungskonditionierer sowie einen daran angeschlossenen Meßaufnehmer aufweist, welches Verfahren folgende Schritte umfaßt:
- Strömenlassen des zu messen Mediums aus dem Zulaufsegment in den Strömungskonditionierer;
- Beschleunigen des strömenden Mediums in Richtung einer gedachten Längsachse des Strömungskonditionerers und Induzieren wenigstens eines im wesentlichen stationären, insb. auch im wesentlichen ortsfesten, toroidalen Wirbels innerhalb von im Einlaßbereich des Strömungskonditionierers strömenden Medium in der Weise, daß eine größte gedachte Trägheitshauptachse des wenigstens einen toroidalen Wirbels mit der gedachten Längsachse des Strömungskonditionerers und/oder einer gedachten Längsachse des Meßrohrs im wesentlichen koinzidiert;
- Vorbeiströmenlassen von zu messendem Medium an dem wenigstens einen toroidalen Wirbel und Strömenlassen von zu messendem Mediums aus dem Strömungskonditionierer in ein Meßrohr des angeschlossenen Meßaufnehmers; sowie
- Erzeugen wenigstens eines von der zu erfassenden Meßgröße beeinflußten Meßsignals (s₁) unter Verwendung wenigstens eine primär auf die Meßgröße, insb. auch Änderungen derselben, reagierendes Sensorelement;
- wobei der Schritt des Induzieren des wenigstens einen im wesentlichen stationären toroidalen Wirbels im Einlaßbereich des Strömungskonditionierers Schritte des Vorbeiströmenlassens von Medium an einer in ein Lumen des Strömungskonditionierers hineinragende, insb. entlang einer von dessen Mantellinien geschlossen umlaufenden, ersten Innenkante des Strömungskonditionierers sowie des Vorbeiströmenlassens von Medium an einer in ein Lumen des Strömungskonditionierers hineinragende, insb. entlang einer von dessen Mantellinien geschlossen umlaufenden, stromabwärts der ersten Innenkante angeordneten zweiten Innenkante des Strömungskonditionierers umfaßt.

19. Verfahren nach dem vorherigen Anspruch, weiters umfassend einen Schritt des Induzierens wenigstens eines weiteren im wesentlichen stationären, insb. im wesentlichen ortsfesten, toroidalen Wirbels im Einlaßbereich des Strömungskonditionierers in der Weise, daß die größte gedachte Trägheitshauptachse jedes der wenigstens zwei toroidalen Wirbel zueinander im wesentlichen parallel verlaufen und/oder zumindest in axialer Verlängerung miteinander im wesentlichen koinzidieren.

20. Verfahren nach dem vorherigen Anspruch, weiters umfassend Schritte des Anströmenlassens von Medium an eine dem strömendem Medium in einem, insb. entlang einer Mantellinien des Strömungskonditionierers geschlossen umlaufenden, Randbereich des Strömungskonditionierers entgegenstehenden Prallfläche des Strömungskonditionieres zum Induzieren im wesentlichen stationären toroidalen Wirbeln im Einlaßbereich des Strömungskonditionierers.

## Claims

1. Measuring system inserted into the course of a process pipe, particularly a pipeline, for the purpose of measuring at least one measured variable, particularly a mass flow, a volume flow, a flow velocity, a density, a viscosity, a pressure, a temperature and/or similar, of a medium flowing through the pipe, said measuring system comprising:
- a sensor
-- with a measuring tube, which is essentially straight and serves to conduct medium to be measured, and which has a smaller flow cross-section (A1) than an infeed segment of the process pipe which is connected to the measuring system on the inlet side, and
-- with a sensor arrangement,
--- which has at least one sensor element (3) that responds primarily to the measured variable under measurement, particularly to changes in said measured variable, and
--- which delivers at least one measuring signal which is influenced by the measured variable using the at least one sensor element,
- measuring electronics that communicate with the sensor and which, using the at least one measuring signal, at least temporarily generate at least one measured value that represents the current measured variable, particularly a mass flow measured value, a volume flow measured value, a density measured value, a viscosity measured value, a pressure measured value, a temperature measured value, as well as
- a flow conditioner, which is arranged on the inlet side of the measuring tube and communicates between said measuring tube and the infeed segment of the process pipe, said flow conditioner having a lumen which tapers towards the measuring tube and through which medium flows during operation,
- wherein an inlet end of the flow conditioner facing towards the infeed segment of the process pipe has a flow cross-section (a) which is greater than the flow cross-section (A1) of the measuring tube, and an outlet end of the flow conditioner facing towards the measuring tube has a flow cross-section (b) which is smaller than the flow cross-section of the inlet end of the flow conditioner, and
- wherein the flow conditioner has at least one circular first interior edge (K1) which projects into the lumen of the flow conditioner and is arranged upstream from the outlet end of the flow conditioner, as well as at least one circular second interior edge (K2) arranged downstream from the first interior edge (K1) and also projecting into the lumen of the flow conditioner, wherein medium carried within the flow conditioner flows towards each of these two interior edges (K1, K2) during operation,
- wherein a first guide surface (LF1) of the flow conditioner extends between the first interior edge (K1) projecting into the lumen of the flow conditioner and the second interior edge (K2) projecting into the lumen of the flow conditioner, said guide surface being essentially strictly concave in shape at least in sections in relation to an imaginary longitudinal axis of the flow conditioner, and
- wherein the second interior edge projecting into the lumen of the flow conditioner limits an essentially convex second guide surface (LF2) of the flow conditioner which serves to conduct medium flowing through the flow conditioner and extends in the direction of the outlet end of the flow conditioner.

2. Measuring system as claimed in Claim 1,
- wherein a cross-section ratio (A2/A1) of the flow cross-section (A2) of the infeed segment of the process pipe to the flow cross-section (A1) of the measuring tube is kept greater than 1.5 and/or less than 10, particularly in a range between 1.66 and 9.6,
- wherein a constriction ratio (a/A2) of a cross-section (a) limited by the first interior edge to the flow cross-section (A2) of the infeed segment of the process pipe is kept smaller than 0.9 and/or greater than 0.1, particularly in a range between 0.25 and 0.85, and
- wherein a difference (A2/A1-a/A2) between the cross-section ratio (A2/A1) and the constriction ratio (a/A2) is kept greater than 0.5 and/or less than 10, particularly in a range greater than 0.83 and less than 9.5.

3. Measuring system as claimed in one of the previous claims,
- wherein a contraction ratio (c/A1) of a cross-section (c) of the lumen of the flow conditioner, which is limited by the second interior edge (K2), to the flow cross-section (A1) of the measuring tube is kept greater than 0.9 and/or less than 5, particularly in a range between 0.9 and 2.5, and
- wherein a difference (A2/A1-c/A1) between a cross-section ratio (A2/A1) of the flow cross-section (A2) of the infeed segment of the process pipe to the flow cross-section (A1) of the measuring tube and the contraction ratio (c/A1) is kept greater than 0.2 and/or less than 10, particularly greater than 0.4 and less than 8.

4. Measuring system as claimed in one of the previous claims,
- wherein a contraction ratio (a/A1) of a cross-section (a), limited by the first interior edge, to the flow cross-section (A1) of the measuring tube is kept greater than 1.2 and/or less than 5, particularly in a range between 1.3 and 3,
- wherein a cross-section ratio (A2/A1) of the flow cross-section (A2) of the infeed segment of the process pipe to the flow cross-section (A1) of the measuring tube is kept greater than 1.5 and/or less than 10, particularly in a range between 1.66 and 9.6, and
- wherein a difference (A2/A1-a/A1) between the cross-section ratio (A2/A1) and the contraction ratio (a/A1) is kept greater than 0.2 and/or less than 10, particularly greater than 0.25 and less than 8.

5. Measuring system as claimed in one of the previous claims, wherein the measuring tube has a smaller caliber (D1) than an infeed segment of the process pipe that is connected to the measuring system on the inlet side, particularly in such a way that,
- the inlet end of the flow conditioner facing towards the infeed segment of the process pipe has a caliber that is greater than a caliber (D1) of the measuring tube, and the outlet end of the flow conditioner facing towards the measuring tube has a caliber that is less than the caliber of the inlet end of the flow conditioner; and/or
- the first interior edge projecting into the lumen of the flow conditioner is formed in such a way that the inner diameter of the inlet end (d) of the flow conditioner is kept smaller than the caliber (D2) of the infeed segment of the process pipe; and/or
- a cross-section of the lumen of the flow conditioner, which is limited by the first interior edge projecting into the lumen of the flow conditioner, has a cross-section (d) which is smaller than the caliber (D2) of the infeed segment of the process pipe; and/or
- a caliber ratio (D2/D1) of the caliber (D2) of the infeed segment of the process pipe to the caliber (D1) of the measuring tube is kept greater than 1.1 and/or less than 5, particularly in a range between 1.2 and 3.1.

6. Measuring system as claimed in one of the previous claims,
- wherein the measuring tube has an installation length (L1) that is greater than an installation length (L2) of the flow conditioner, such that an installation length ratio (L2/L1) of the installation length (L2) of the flow conditioner to the installation length (L1) of the measuring tube is kept less than one,
- wherein the measuring tube has a smaller caliber (D1) than an infeed segment of the process pipe connected to the measuring system at the inlet side, and
- wherein a caliber ratio (D2/D1) of the caliber (D2) of the infeed segment of the process pipe to the caliber (D1) of the measuring tube is at least 10% of the installation length ratio (L2/L1) of the installation length (L2) of the flow conditioner to the installation length (L1) of the measuring tube.

7. Measuring system as claimed in one of the previous claims,
- wherein the at least one sensor element, particularly a sensor element that is immersed in the medium during operation, is arranged in the measuring tube and/or, particularly directly, on the measuring tube at a distance (Lm) from the inlet end of the measuring tube,
- wherein the measuring tube has a smaller caliber (D1) than an infeed segment of the process pipe connected to the measuring system on the inlet side, and
- wherein the at least one sensor element is positioned in such a way that a ratio of the distance (Lm) to the caliber (D1) of the measuring tube is kept greater than one.

8. Measuring system as claimed in one of the previous claims, wherein the first interior edge projecting into the lumen of the flow conditioner limits a baffle surface of the flow conditioner which serves to dam medium flowing by the flow conditioner and is arranged in a, particularly circular, peripheral area of the flow conditioner.

9. Measuring system as claimed in the previous claim,
- wherein the baffle surface is arranged and aligned in the flow conditioner in such a way that it is at least partially essentially perpendicular to an imaginary longitudinal axis of the flow conditioner and/or that it is partially essentially perpendicular to an imaginary longitudinal axis of the measuring tube; and/or
- wherein in the radial direction the baffle surface has a height that is at least 1 mm; and/or
- wherein the baffle surface is designed as a circular area; and/or
- wherein the baffle surface and the first interior edge are formed at least on a partial basis by a shoulder formed in the flow conditioner on the inlet side, particularly a circular shoulder or a shoulder closed in on itself; and/or
- wherein the baffle surface at least partially has an essentially planar design; and/or
- wherein the baffle surface is arranged and aligned in the flow conditioner in such a way that it is partially essentially coplanar to a cross-section of the flow conditioner and/or that it is partially essentially coplanar to a cross-section of the measuring tube.

10. Measuring system as claimed in Claim 8,
- wherein the baffle surface is at least partially essentially conical in shape; and/or
- wherein the baffle surface tapers towards the measuring tube; and/or
- wherein the baffle surface widens towards the inlet end of the flow conditioner.

11. Measuring system as claimed in Claim 8 or the previous claim, wherein the baffle surface and the first interior edge are formed at least on a partial basis by an internal cone which is formed in the flow conditioner on the inlet side, and in particular extends to the inlet side of the flow conditioner, and tapers towards the measuring tube, particularly in such a way
- that the internal cone forming the baffle surface of the flow conditioner has a flank angle (α) greater than 45°; and/or
- that the internal cone forming the baffle surface of the flow conditioner has a flank angle (α) less than 90°; and/or
- that the internal cone forming the baffle surface of the flow conditioner has a flank angle (α) that is greater than 60° and less than 88°.

12. Measuring system as claimed in one of the previous claims,
- wherein the second guide surface and the second interior edge are at least partially formed by an internal cone which is formed in the flow conditioner on the inlet side and particularly extends to the outlet end of the flow conditioner, and
- wherein the internal cone forming the second guide surface of the flow conditioner has a flank angle (ß) which is greater than 2°, particularly greater than 4°, and/or less than 45°, particularly less than 10°.

13. Measuring system as claimed in Claim 11 and 12, wherein the baffle surface is formed by an internal cone formed in the flow conditioner on the inlet side and extending in the direction of the inlet end of the flow conditioner, and wherein the second guide surface is formed by a second internal cone formed in the flow conditioner on the inlet side and extending in the direction of the outlet end of the flow conditioner, particularly in such a way that the first internal cone forming the baffle surface has a flank angle that is greater than the flank angle of the second internal cone which forms the second guide surface.

14. Measuring system as claimed in the previous claim,
- wherein the first internal cone which forms the baffle surface of the flow conditioner has a flank angle (α) which is greater than 45°, particularly greater than 60°, and which is less than 90°, particularly less than 88°, and
- wherein the second internal cone which forms the second guide surface of the flow conditioner has a flank angle (ß) which is greater than 2°, particularly greater than 4°, and which is less than 45°, particularly less than 10°.

15. Measuring system as claimed in one of the previous claims, wherein the sensor, which is particularly designed as a vortex flow sensor, comprises at least one bluff body which is arranged in the measuring tube, particularly in such a way that the at least one sensor element of the sensor arrangement is arranged downstream from the at least one bluff body and/or projects into the measuring tube at least in part.

16. Measuring system as claimed in one of the Claims 1-14, wherein the sensor is one of the following: a vortex flow sensor, particularly a vortex street flow sensor, an electromagnetic flow sensor, a vibronic flow sensor, particularly a Coriolis mass flow sensor, a density sensor and/or a viscosity sensor; or an ultrasonic flow sensor.

17. Measuring system as claimed in one of the previous claims,
- wherein a cross-section ratio (A2/A1) of the flow cross-section (A2) of the infeed segment of the process pipe to the flow cross-section (A1) of the measuring tube is kept greater than 1.5 and/or less than 10, particularly in a range between 1.66 and 9.6; and/or
- wherein a constriction ratio (a/A2) of a cross-section (a) that is limited by the first interior edge to the flow cross-section (A2) of the infeed segment of the process pipe is kept less than 0.9 and/or greater than 0.1, particularly in a range between 0.25 and 0.85; and/or
- wherein a contraction ratio (c/A1) of a cross-section (c) of the lumen of the flow conditioner, said cross-section being limited by the second interior edge (K2), to the flow cross-section (A1) of the measuring tube is kept greater than 0.9 and/or less than 5, particularly in a range between 0.9 and 2.5; and/or
- wherein a contraction ratio (a/A1) of a cross-section (a) limited by the first interior edge to the flow cross-section (A1) of the measuring tube is kept greater than 1.2 and/or less than 5, particularly in a range between 1.3 and 3; and/or
- wherein the measuring tube has an installation length (L1) that is greater than an installation length (L2) of the flow conditioner such that an installation ratio (L2/L1) of the installation length (L2) of the flow conditioner to the installation length (L1) of the measuring tube is kept less than one; and/or
- wherein the at least one sensor element, which is immersed in particular in the medium, is arranged in the measuring tube and/or, particularly directly, on the measuring tube at a distance (Lm) from the inlet end of the measuring tube;
and/or
- wherein the second guide surface and the second interior edge are formed at least in part by an internal cone formed in the flow conditioner on the inlet side, particularly extending to the outlet end of the flow conditioner; and/or
- wherein a cross-section (a) of the lumen of the flow conditioner, which is limited by the first interior edge projecting into the lumen of the flow conditioner, is greater than a cross-section (c) of the lumen of the flow conditioner, said lumen being limited by the second interior edge projecting into the lumen of the flow conditioner; and/or
- wherein a cross-section (c) of the lumen of the flow conditioner, which is limited by the second interior edge (K2) which projects into the lumen of the flow conditioner, is smaller than the flow cross-section (A2) of the infeed segment of the process pipe, particularly smaller than the flow cross-section of the inlet end of the flow conditioner; and/or
- wherein a constriction ratio (c/A2) of a cross-section (c) of the lumen of the flow conditioner, said cross-section being limited by the second interior edge (K2), to the flow cross-section (A2) of the infeed segment of the process pipe is kept less than 0.9 and/or greater than 0.1, particularly in a range between 0.19 and 0.78;
and/or
- wherein each of the interior edges projecting into the lumen of the flow conditioner is designed and arranged in the flow conditioner in such a way that it is aligned essentially perpendicular to an imaginary longitudinal axis of the flow conditioner and/or perpendicular to a longitudinal axis of the measuring tube; and/or
- wherein each of the interior edges projecting into the lumen of the flow conditioner is essentially designed in a circumferential manner, particularly circular, and therefore in a manner that they are closed in on themselves; and/or
- wherein each of the interior edges projecting into the lumen of the flow conditioner has an edge radius that is less than 2 mm, particularly less than 0.6 mm; and/or
- wherein a cross-section (a) of the lumen of the flow conditioner, which is limited by the second interior edge projecting into the lumen of the flow conditioner, particularly also a cross-section (a) of the lumen of the flow conditioner limited by the first interior edge projecting into the lumen of the flow conditioner, is smaller than the flow cross-section (A2) of the infeed segment of the process pipe; and/or
- wherein the first interior edge projecting into the lumen of the flow conditioner is arranged in the vicinity, particularly in the direct vicinity, of the inlet end of the flow conditioner; and/or
- wherein the first interior edge projecting into the lumen of the flow conditioner is arranged immediately on the inlet end of the flow conditioner; and/or
- wherein the flow conditioner has an essentially cylindrical shape at least in an inlet area; and/or
- wherein the measuring tube has an essentially cylindrical shape at least in an inlet area; and/or
- wherein the flow conditioner has an essentially cylindrical shape at least in an outlet area; and/or
- wherein the measuring tube, notably a cylindrical measuring tube, is essentially straight; and/or
- wherein the first guide surface is formed at least partially by a groove or a slot formed in the flow conditioner, particularly a circular and/or circumferential groove/slot; and/or
- wherein the first guide surface is formed by an annular groove formed in the flow conditioner; and/or
- wherein the first guide surface is formed by an internal cone formed in the flow conditioner; and/or
- wherein the first guide surface (L2) is concave in shape, particularly primarily or completely, in relation to an imaginary longitudinal axis of the flow conditioner; and/or
- wherein the second guide surface, particularly conical, of the flow conditioner is at least partially convex in shape in relation to an imaginary longitudinal axis of the flow conditioner; and/or
- wherein the second guide surface, particularly conical, of the flow conditioner is at least partially concave in shape; and/or
- wherein the second guide surface of the flow conditioner tapers towards the measuring tube; and/or
- wherein the second guide surface of the flow conditioner is essentially conical in shape; and/or
- wherein the at least one sensor element is formed by at least one piezoelectric element and/or by at least one piezoresistive element; and/or
- wherein the at least one sensor element is formed by at least one plunger coil corresponding to an anchor; and/or
- wherein the at least one sensor element is formed by at least one measuring electrode which comes into contact with the medium flowing in the measuring tube and measures electrical potential; and/or
- wherein the at least one sensor element is formed by at least one measuring capacitor that reacts to changes in the measured variable; and/or
- wherein the at least one sensor element is formed by at least one electrical resistor; and/or
- wherein, during operation, the at least one sensor element is repeatedly subject to mechanical deformations under the action of the medium flowing in the measuring tube; and/or
- wherein, during operation, the at least one sensor element is moved repeatedly relative to a static rest position under the action of the medium flowing in the measuring tube;

18. Procedure designed to record at least one measured variable, particularly a mass flow, a volume flow, a flow velocity, a density, a viscosity, a pressure, a temperature and/or a similar measured variable, of a medium flowing through a process pipe using a measuring system inserted in the course of the process pipe, said system having a flow conditioner connected to an infeed segment of the process pipe, and a sensor connected thereto, said procedure comprising the following steps:
- Medium to be measured is allowed to flow out of the infeed segment and into the flow conditioner;
- The flowing medium is accelerated in the direction of an imaginary longitudinal axis of the flow conditioner and induction of at least one essentially stationary, particularly also essentially fixed, toroidal vortex within the medium flowing in the inlet area of the flow conditioner in such a way that a maximum imaginary primary axis of inertia of the at least one toroidal vortex essentially coincides with the imaginary longitudinal axis of the flow conditioner and/or an imaginary longitudinal axis of the measuring tube;
- Medium to be measured is allowed to flow past the at least one toroidal vortex and medium to be measured is allowed to flow out of the flow conditioner into a measuring tube of the connected sensor; and
- At least one measuring signal (s₁) influenced by the measured variable to be recorded is generated using at least one sensor element that reacts primarily to the measured variable, particularly to changes in said measured variable;
- Wherein the step of inducing the at least one essentially stationary toroidal vortex in the inlet area of the flow conditioner comprises the steps of allowing medium to flow by a first interior edge of the flow conditioner, which projects into a lumen of the flow conditioner, and particularly running closed along one of the flow conditioner's surface lines, and of allowing medium to flow by a second interior edge of the flow conditioner which is arranged downstream from the first interior edge, said second interior edge projecting into a lumen of the flow conditioner and particularly running closed along one of the flow conditioner's surface lines.

19. Procedure as claimed in the previous claim, further comprising a step whereby at least another essentially stationary, particularly also essentially fixed, toroidal vortex is induced in the inlet area of the flow conditioner, such that the maximum imaginary primary axis of inertia of each of the at least two toroidal vortices are essentially parallel to one another and/or essentially coincide with one another at least in the axial extension.

20. Procedure as claimed in the previous claim, further comprising steps whereby medium is allowed to flow past a baffle area of the flow conditioner situated opposite the flowing medium in a peripheral area of the flow conditioner, particularly one that is closed circumferentially along a surface line of the flow conditioner, for the purpose of inducing essentially stationary toroidal vortices in the inlet area of the flow conditioner.

## Revendications

1. Système de mesure inséré dans l'écoulement d'une ligne de process, notamment une conduite, lequel système est destiné à l'acquisition d'au moins une grandeur de mesure, notamment un débit massique, un débit volumique, une vitesse d'écoulement, une densité, une viscosité, une pression, une température et/ou une grandeur similaire, d'un produit s'écoulant dans la ligne de process, lequel système de mesure comprend :
- un capteur
-- avec un tube de mesure, notamment pour l'essentiel droit, destiné à guider le produit à mesurer, lequel tube présente une section d'écoulement (A1) inférieure à un segment d'alimentation de la ligne de process raccordé côté entrée au système de mesure, et
-- avec un circuit détecteur,
--- qui comporte au minimum un élément détecteur (3) primaire réagissant à la grandeur de mesure à acquérir, notamment également aux changements de celle-ci, et
--- qui délivre au moyen de l'au moins un élément détecteur au moins un signal de mesure influencé par la grandeur de mesure,
- une électronique de mesure communiquant avec le capteur qui, en utilisant l'au moins un signal de mesure, génère au moins temporairement au minimum une valeur mesurée représentant momentanément la grandeur de mesure, notamment une valeur mesurée de débit massique, une valeur mesurée de débit volumique, une valeur mesurée de densité, une valeur mesurée de viscosité, une valeur mesurée de pression, une valeur mesurée de température, ainsi que
- un conditionneur d'écoulement intermédiaire disposé côté entrée du tube de mesure, entre ce dernier et le segment d'alimentation de la ligne de process, lequel conditionneur comporte un canal intérieur parcouru par le produit en fonctionnement, lequel canal se rétrécit en direction du tube de mesure,
- une extrémité d'entrée, faisant face au segment d'alimentation de la ligne de process, du conditionneur d'écoulement présentant une section d'écoulement (a) supérieure à la section d'écoulement (A1) du tube de mesure, et une extrémité de sortie, faisant face au tube de mesure, du conditionneur d'écoulement présentant une section d'écoulement (b) inférieure à la section d'écoulement de l'extrémité d'entrée du conditionneur d'écoulement, et
- le conditionneur d'écoulement présentant au moins un premier bord intérieur (K1) circulaire disposé en amont de son extrémité de sortie et pénétrant dans le canal intérieur du conditionneur d'écoulement, ainsi qu'au moins un deuxième bord intérieur (K2) circulaire disposé en aval du premier bord intérieur (K1), pénétrant également dans le canal intérieur du conditionneur d'écoulement, les deux bords intérieurs (K1, K2) étant balayés, en fonctionnement, par le produit guidé à l'intérieur du conditionneur d'écoulement,
- une première surface de guidage (LF1) du conditionneur d'écoulement, pour l'essentiel formée de façon fortement concave, s'étendant entre le premier bord intérieur (K1) pénétrant dans le canal intérieur du conditionneur d'écoulement et le deuxième bord intérieur (K2) pénétrant dans le canal intérieur du conditionneur d'écoulement, au moins partiellement par rapport à un axe longitudinal imaginaire du conditionneur d'écoulement, et
- un deuxième bord intérieur qui pénètre dans le canal intérieur du conditionneur d'écoulement servant au guidage du produit s'écoulant dans le conditionneur d'écoulement, limitant la deuxième surface de guidage (LF2) du conditionneur d'écoulement, notamment pour l'essentiel convexe, s'étendant en direction de l'extrémité de sortie du conditionneur d'écoulement.

2. Système de mesure selon la revendication 1,
- pour lequel un rapport (A2/A1) entre la section d'écoulement (A2) du segment d'alimentation de la ligne de process et la section d'écoulement (A1) du tube de mesure est maintenu supérieur à 1,5 et/ou inférieur à 10, notamment dans une plage comprise entre 1,66 et 9,6,
- pour lequel un rapport de striction (a/A2) entre une section (a) limitée par le premier bord intérieur et la section d'écoulement (A2) du segment d'alimentation de la ligne de process est maintenu inférieur à 0,9 et/ou supérieur à 0,1, notamment dans une plage comprise entre 0,25 et 0,85, et
- pour lequel une différence (A2/A1-a/A2) entre le rapport de section (A2/A1) et le rapport de striction (a/A2) est maintenue supérieure à 0,5 et/ou inférieure à 10, notamment supérieure à 0,83 et inférieure à 9,5.

3. Système de mesure selon l'une des revendications précédentes,
- pour lequel un rapport de contraction (c/A1) entre une section (c) limitée par le deuxième bord intérieur (K2) du canal intérieur du conditionneur d'écoulement et la section d'écoulement (A1) du tube de mesure est maintenu supérieur à 0,9 et/ou inférieur à 5, notamment dans une plage comprise entre 0,9 et 2,5, et
- pour lequel une différence (A2/A1-c/A1) entre un rapport (A2/A1) de la section d'écoulement (A2) du segment d'alimentation de la ligne de process et la section d'écoulement (A1) du tube de mesure et le rapport de contraction (c/A1) est maintenue supérieure à 0,2 et/ou inférieure à 10, notamment supérieure à 0,4 et inférieure à 8.

4. Système de mesure selon l'une des revendications précédentes,
- pour lequel un rapport de contraction (a/A1) entre une section (a) limitée par le premier bord intérieur et la section d'écoulement (A1) du tube de mesure est maintenu supérieur à 1,2 et/ou inférieur à 5, notamment dans une plage comprise entre 1,3 et 3,
- pour lequel le rapport (A2/A1) entre la section d'écoulement (A2) du segment d'alimentation de la ligne de process et la section d'écoulement (A1) du tube de mesure est maintenu supérieur à 1,5 et/ou inférieur à 10, notamment dans une plage comprise entre 1,66 et 9,6, et
- pour lequel une différence (A2/A1-a/A1) entre le rapport de section (A2/A1) et le rapport de contraction (a/A1) est maintenue supérieure à 0,2 et/ou inférieure à 10, notamment supérieure à 0,25 et inférieure à 8.

5. Système de mesure selon l'une des revendications précédentes, pour lequel le tube de mesure présente un calibre (D1) inférieur à un segment d'alimentation de la ligne de process, raccordé côté entrée au système de mesure, notamment de telle sorte,
- que l'extrémité d'entrée du conditionneur d'écoulement, faisant face au segment d'alimentation de la ligne de process, présente un calibre supérieur à un calibre (D1) du tube de mesure, et que l'extrémité de sortie du conditionneur d'écoulement, faisant face au tube de mesure, présente un calibre inférieur au calibre de l'extrémité d'entrée du conditionneur d'écoulement ; et/ou
- que le premier bord intérieur pénétrant dans le canal intérieur du conditionneur d'écoulement est formé en ce que le diamètre intérieur de l'extrémité d'entrée (d) du conditionneur d'écoulement est maintenu inférieur au calibre (D2) du segment d'alimentation de la ligne de process ; et/ou
- qu'une section limitée par le premier bord intérieur pénétrant dans le canal intérieur du conditionneur d'écoulement présente un diamètre (d) inférieur au calibre (D2) du segment d'alimentation de la ligne de process ; et/ou
- qu'un rapport (D2/D1) entre le calibre (D2) du segment d'alimentation de la ligne de process et le calibre (D1) du tube de mesure est maintenu supérieur à 1,1 et/ou inférieur à 5, notamment dans une plage comprise entre 1,2 et 3,1.

6. Système de mesure selon l'une des revendications précédentes,
- pour lequel le tube de mesure présente une longueur hors tout (L1) supérieure à une longueur hors tout (L2) du conditionneur d'écoulement, de telle sorte qu'un rapport (L2/L1) entre la longueur hors tout (L2) du conditionneur d'écoulement et la longueur hors tout (L1) du tube de mesure est maintenu inférieur à un,
- pour lequel le tube de mesure présente un calibre (D1) inférieur à un segment d'alimentation de la ligne de process raccordé côté entrée au système de mesure, et
- pour lequel un rapport (D2/D1) entre le calibre (D2) du segment d'alimentation de la ligne de process et le calibre (D1) du tube de mesure correspond à au moins 10 % du rapport (L2/L1) entre la longueur hors tout (L2) du conditionneur d'écoulement et la longueur hors tout (L1) du tube de mesure.

7. Système de mesure selon l'une des revendications précédentes,
- pour lequel l'au moins un élément détecteur, notamment immergé en fonctionnement dans le produit, est disposé dans le tube de mesure, et/ou notamment dans sa proximité immédiate, à une distance (Lm) de l'extrémité d'entrée du tube de mesure,
- pour lequel le tube de mesure présente un calibre (D1) inférieur au segment d'alimentation de la ligne de process raccordé côté entrée au système de mesure, et
- pour lequel l'au moins un élément détecteur est placé de telle sorte qu'un rapport entre la distance (Lm) et le calibre (D1) du tube de mesure est maintenu supérieur à un.

8. Système de mesure selon l'une des revendications précédentes, pour lequel le premier bord intérieur pénétrant dans le canal intérieur du conditionneur d'écoulement limite une surface d'impact du conditionneur d'écoulement, servant à l'accumulation du produit y affluant, disposée dans une zone marginale périphérique, notamment circulaire, du conditionneur d'écoulement.

9. Système de mesure selon la revendication précédente,
- pour lequel la surface d'impact est disposée et alignée dans le conditionneur d'écoulement de telle sorte qu'elle s'étend au moins partiellement, pour l'essentiel perpendiculairement à un axe longitudinal imaginaire du conditionneur d'écoulement et/ou au moins partiellement, pour l'essentiel perpendiculairement à un axe longitudinal imaginaire du tube de mesure ; et/ou
- pour lequel la surface d'impact présente en direction radiale une hauteur d'au moins 1 mm ; et/ou
- pour lequel la surface d'impact est formée en tant que surface annulaire ; et/ou
- pour lequel la surface d'impact et le premier bord intérieur sont formés au moins partiellement par un épaulement notamment circulaire et/ou fermé sur lui-même, formé côté entrée dans le conditionneur d'écoulement ; et/ou
- pour lequel la surface d'impact est formée au moins partiellement pour l'essentiel de façon planaire ; et/ou
- pour lequel la surface d'impact est disposée et alignée dans le conditionneur d'écoulement de telle sorte qu'elle est partiellement pour l'essentiel coplanaire par rapport à une section du conditionneur d'écoulement et/ou qu'elle est partiellement pour l'essentiel coplanaire à une section du tube de mesure.

10. Système de mesure selon la revendication 8,
- pour lequel la surface d'impact est conçue au moins partiellement pour l'essentiel en forme de cône ; et/ou
- pour lequel la surface d'impact est formée de façon à se rétrécir en direction du tube de mesure ; et/ou
- pour lequel la surface d'impact est formée de façon à s'élargir vers l'extrémité d'entrée du conditionneur d'écoulement.

11. Système de mesure selon la revendication 8 ou selon la revendication précédente, pour lequel la surface d'impact et le premier bord intérieur sont formés au moins partiellement par un cône intérieur s'étendant notamment vers son extrémité d'entrée, formé côté entrée dans le conditionneur d'écoulement et se rétrécissant en direction du tube de mesure, notamment de telle sorte
- que le cône intérieur formant la surface d'impact du conditionneur d'écoulement présente un angle de flanc (a) supérieur à 45° ; et/ou
- que le cône intérieur formant la surface d'impact du conditionneur d'écoulement présente un angle de flanc (a) inférieur à 90° ; et/ou
- que le cône intérieur formant la surface d'impact du conditionneur d'écoulement présente un angle de flanc (a) supérieur à 60° et inférieur à 88°.

12. Système de mesure selon l'une des revendications précédentes,
- pour lequel la deuxième surface de guidage et le deuxième bord intérieur sont formés au moins partiellement par un cône intérieur formé côté entrée dans le conditionneur d'écoulement, s'étendant notamment vers l'extrémité de sortie de ce dernier, et
- pour lequel le cône intérieur formant la deuxième surface de guidage du conditionneur d'écoulement présente un angle de flanc (ß) supérieur à 2°, notamment supérieur à 4°, et/ou inférieur à 45°, notamment inférieur à 10°.

13. Système de mesure selon la revendication 11 et 12, pour lequel la surface d'impact est formée par un premier cône intérieur formé côté entrée dans le conditionneur d'écoulement, s'étendant en direction de l'extrémité d'entrée de ce dernier, et la deuxième surface de guidage est formée par un deuxième cône intérieur formé côté entrée dans le conditionneur d'écoulement, s'étendant en direction de l'extrémité de sortie de ce dernier, notamment de telle sorte que le premier cône intérieur formant la surface d'impact présente un angle de flanc supérieur à l'angle de flanc du deuxième cône intérieur formant la deuxième surface de guidage.

14. Système de mesure selon la revendication précédente,
- pour lequel le premier cône intérieur formant la surface d'impact du conditionneur d'écoulement présente un angle de flanc (α) supérieur à 45°, notamment supérieur à 60°, et inférieur à 90°, notamment inférieur à 88°, et
- pour lequel le deuxième cône intérieur formant la deuxième surface de guidage du conditionneur d'écoulement présente un angle de flanc (ß) supérieur à 2°, notamment supérieur à 4°, et inférieur à 45°, notamment inférieur à 10°.

15. Système de mesure selon l'une des revendications précédentes, pour lequel le capteur, notamment conçu en tant que capteur de débit vortex, comprend au moins un corps de retenue disposé dans le tube de mesure, notamment de telle sorte que l'au moins un élément détecteur du circuit détecteur est disposé en aval de l'au moins un corps de retenue et/ou pénètre au moins partiellement dans le tube de mesure.

16. Système de mesure selon l'une des revendications 1 à 14, pour lequel concernant le capteur, il s'agit de l'un des capteurs suivants : un capteur de débit vortex, notamment un capteur de débit d'allée tourbillonnaire, un capteur de débit magnéto-inductif ; un capteur de débit du type à vibrations, notamment un capteur de débit massique selon Coriolis, un capteur de densité et/ou un capteur de viscosité ; ou un capteur de débit à ultrasons.

17. Système de mesure selon l'une des revendications précédentes,
- pour lequel un rapport (A2/A1) entre la section d'écoulement (A2) du segment d'alimentation de la ligne de process et la section d'écoulement (A1) du tube de mesure est maintenu supérieur à 1,5 et/ou inférieur à 10, notamment dans une plage comprise entre 1,66 et 9,6 ; et/ou
- pour lequel un rapport de striction (a/A2) entre la section (a) limitée par le premier bord intérieur et la section d'écoulement (A2) du segment d'alimentation de la ligne de process est inférieur à 0,9 et/ou supérieur à 0,1, notamment dans une plage comprise entre 0,25 et 0,85 ; et/ou
- pour lequel un rapport de contraction (c/A1) entre la section (c) limitée par le deuxième bord intérieur (K2) du canal intérieur du conditionneur d'écoulement et la section d'écoulement (A1) du tube de mesure est maintenu supérieur à 0,9 et/ou inférieur à 5, notamment dans une plage comprise entre 0,9 et 2,5 ; et/ou
- pour lequel un rapport de contraction (a/A1) entre la section (a) limitée par le premier bord intérieur et la section d'écoulement (A1) du tube de mesure est maintenu supérieur à 1,2 et/ou inférieur à 5, notamment dans une plage comprise entre 1,3 et 3 ; et/ou
- pour lequel le tube de mesure présente une longueur hors tout (L1) supérieure à une longueur hors tout (L2) du conditionneur d'écoulement, de telle sorte qu'un rapport (L2/L1) entre la longueur hors tout (L2) du conditionneur d'écoulement et la longueur hors tout (L1) du tube de mesure est maintenu inférieur à un ; et/ou
- pour lequel l'au moins un élément détecteur, notamment immergé en fonctionnement dans le produit, est disposé dans le tube de mesure, et/ou notamment dans sa proximité immédiate, à une distance (Lm) de l'extrémité d'entrée du tube de mesure ; et/ou
- pour lequel la deuxième surface de guidage et le deuxième bord intérieur sont formés au moins partiellement par un cône intérieur formé côté entrée dans le conditionneur d'écoulement, s'étendant notamment vers l'extrémité de sortie de ce dernier ; et/ou
- pour lequel une section (a) du canal intérieur du conditionneur d'écoulement, limitée par le premier bord intérieur pénétrant dans le canal intérieur du conditionneur d'écoulement, est supérieure à une section (c) du canal intérieur du conditionneur d'écoulement, limitée par le deuxième bord intérieur pénétrant dans le canal intérieur du conditionneur d'écoulement ; et/ou
- pour lequel une section (c) du canal intérieur du conditionneur d'écoulement, limitée par le deuxième bord intérieur (K2) pénétrant dans le canal intérieur du conditionneur d'écoulement, est inférieure à la section d'écoulement (A2) du segment d'alimentation de la ligne de process, notamment inférieur à la section d'écoulement de l'extrémité d'entrée du conditionneur d'écoulement ; et/ou
- pour lequel un rapport de striction (c/A2) entre la section (c) du canal intérieur du conditionneur d'écoulement, limitée par le deuxième bord intérieur (K2), et la section d'écoulement (A2) du segment d'alimentation de la ligne de process est maintenu inférieur à 0,9 et/ou supérieur à 0,1, notamment dans une plage comprise entre 0,19 et 0,78 ; et/ou
- pour lequel chacun des bords intérieurs pénétrant dans le canal intérieur du conditionneur d'écoulement est formé et est disposé dans le conditionneur d'écoulement de telle sorte à être aligné pour l'essentiel perpendiculairement à un axe longitudinal imaginaire du conditionneur d'écoulement et/ou perpendiculairement à un axe longitudinal imaginaire du tube de mesure ; et/ou
- pour lequel chacun des bords intérieurs pénétrant dans le canal intérieur du conditionneur d'écoulement est conçu de façon périphérique, notamment circulaire, et fermé sur lui-méme ; et/ou
- pour lequel chacun des bords intérieurs pénétrant dans le canal intérieur du conditionneur d'écoulement présente un rayon d'arête inférieur à 2 mm, notamment inférieur à 0,6 mm ; et/ou
- pour lequel une section (a) du canal intérieur du conditionneur d'écoulement, limitée par le deuxième bord intérieur pénétrant dans le canal intérieur du conditionneur d'écoulement, notamment également une section (a) du canal intérieur du conditionneur d'écoulement, limitée par le premier bord intérieur pénétrant dans le canal intérieur du conditionneur d'écoulement, est inférieure à la section d'écoulement (A2) du segment d'alimentation de la ligne de process ; et/ou
- pour lequel le premier bord intérieur pénétrant dans le canal intérieur du conditionneur d'écoulement est disposé près, notamment à proximité immédiate, de l'extrémité d'entrée du conditionneur d'écoulement ; et/ou
- pour lequel le premier bord intérieur pénétrant dans le canal intérieur du conditionneur d'écoulement est disposé directement à l'extrémité d'entrée du conditionneur d'écoulement ; et/ou
- pour lequel le conditionneur d'écoulement est formé, au moins dans la zone d'entrée, pour l'essentiel de façon cylindrique circulaire ; et/ou
- pour lequel le tube de mesure est formé, au moins dans la zone d'entrée, pour l'essentiel de façon cylindrique circulaire ; et/ou
- pour lequel le conditionneur d'écoulement est formé, au moins dans la zone de sortie, pour l'essentiel de façon cylindrique circulaire ; et/ou
- pour lequel le tube de mesure, notamment cylindrique circulaire, est pour l'essentiel droit ; et/ou
- pour lequel la première surface de guidage est constituée au moins partiellement d'une rainure ou d'une gorge, notamment circulaire et/ou périphérique, formée dans le conditionneur d'écoulement ; et/ou
- pour lequel la première surface de guidage est constituée d'une rainure annulaire formée dans le conditionneur d'écoulement ; et/ou
- pour lequel la première surface de guidage est constituée d'un cône intérieur formé dans le conditionneur d'écoulement ; et/ou
- pour lequel la première surface de guidage (L2) est formée de façon concave, notamment essentiellement ou intégralement, par rapport à un axe longitudinal imaginaire du conditionneur d'écoulement ; et/ou
- pour lequel la deuxième surface de guidage, notamment conique, du conditionneur d'écoulement est formée au moins partiellement de façon convexe par rapport à un axe longitudinal imaginaire du conditionneur d'écoulement ; et/ou
- pour lequel la deuxième surface de guidage, notamment conique, du conditionneur d'écoulement est formée au moins partiellement de façon concave ; et/ou
- pour lequel la deuxième surface de guidage du conditionneur d'écoulement est conçue de façon à se rétrécir en direction du tube de mesure ; et/ou
- pour lequel la deuxième surface de guidage du conditionneur d'écoulement est pour l'essentiel de forme conique ; et/ou
- pour lequel l'au moins un élément détecteur est constitué au moyen d'au moins un élément piézolélectrique et/ou au moyen d'au moins un élément piézorésistif ; et/ou
- pour lequel l'au moins un élément détecteur est constitué au moyen d'au moins une bobine mobile correspondant avec un noyau ; et/ou
- pour lequel l'au moins un élément détecteur est constitué au moyen d'au moins une électrode de mesure prélevant des potentiels électriques, en contact avec le produit s'écoulant dans le tube de mesure ; et/ou
- pour lequel l'au moins un élément détecteur est constitué au moyen d'au moins un condensateur de mesure réagissant aux changements de la grandeur de mesure ; et/ou
- pour lequel l'au moins un élément détecteur est constitué au moyen d'au moins une résistance électrique ; et/ou
- pour lequel l'au moins un élément détecteur est soumis, en fonctionnement, à des déformations mécaniques répétées sous l'action du produit s'écoulant dans le tube de mesure ; et/ou
- pour lequel l'au moins un élément détecteur est déplacé, en fonctionnement, de façon répétée par rapport à une position de repos statique, sous l'action du produit s'écoulant dans le tube de mesure ;

18. Procédé destiné à l'acquisition d'au moins une grandeur de mesure, notamment un débit massique, un débit volumique, une vitesse d'écoulement, une densité, une viscosité, une pression, une température et/ou une grandeur similaire, d'un produit s'écoulant dans la ligne de process, au moyen d'un système de mesure inséré dans l'écoulement de la ligne de process, lequel système comprend un conditionneur d'écoulement raccordé au segment d'alimentation de la ligne de process, ainsi qu'un capteur qui y est raccordé, lequel procédé comprend les étapes suivantes :
- Écoulement du produit à mesurer depuis le segment d'alimentation dans le conditionneur d'écoulement ;
- Accélération de l'écoulement de produit en direction d'un axe longitudinal imaginaire du conditionneur d'écoulement et induction d'au moins un tourbillon toroïdal pour l'essentiel stationnaire, notamment également pour l'essentiel fixe, au sein du produit s'écoulant dans la zone d'entrée du conditionneur d'écoulement, de telle sorte qu'un axe principal d'inertie imaginaire maximal de l'au moins un tourbillon toroïdal coïncide pour l'essentiel avec l'axe longitudinal imaginaire du conditionneur d'écoulement et/ou avec un axe longitudinal imaginaire du tube de mesure ;
- Écoulement du produit à mesurer à travers l'au moins un tourbillon toroïdal et écoulement du produit à mesurer depuis le conditionneur d'écoulement dans un tube de mesure du capteur raccordé ; ainsi que
- Génération d'au moins un signal de mesure (s₁) influencé par la grandeur de mesure à acquérir, en utilisant au moins un élément détecteur primaire réagissant à la grandeur de mesure, notamment également aux changements de celle-ci ;
- L'étape d'induction de l'au moins un tourbillon toroïdal pour l'essentiel stationnaire dans la zone d'entrée du conditionneur d'écoulement comprenant des étapes de l'écoulement de produit au niveau d'un premier bord intérieur périphérique du conditionneur d'écoulement, notamment fermé le long de sa génératrice, bord pénétrant dans un canal intérieur du conditionneur d'écoulement, ainsi que de l'écoulement de produit au niveau d'un deuxième bord intérieur périphérique du conditionneur d'écoulement disposé en aval du premier bord intérieur, lequel deuxième bord est notamment fermé le long de sa génératrice et pénètre dans un canal intérieur du conditionneur d'écoulement.

19. Procédé selon la revendication précédente, comprenant en outre une étape de l'induction d'au moins un autre tourbillon toroïdal pour l'essentiel stationnaire, notamment pour l'essentiel fixe, dans la zone d'entrée du conditionneur d'écoulement, de telle manière que l'axe principal d'inertie imaginaire maximal de chacun des au moins deux tourbillons toroïdaux sont pour l'essentiel parallèles et/ou coïncident pour l'essentiel entre eux au moins dans le prolongement axial.

20. Procédé selon la revendication précédente, comprenant en outre des étapes de l'écoulement de produit au niveau d'une surface d'impact située à l'opposé du produit s'écoulant dans une zone marginale périphérique du conditionneur d'écoulement, notamment fermée le long d'une génératrice du conditionneur d'écoulement, en vue de l'induction de tourbillons toroïdaux pour l'essentiel stationnaires dans la zone d'entrée du conditionneur d'écoulement.
